# EUROPEAN PATENT SPECIFICATION

(11) **EP 4 343 646 B1**
(45) Date of publication and mention of the grant of the patent: **02.09.2026**
(21) Application number: 23199479.9
(22) Date of filing: 25.09.2023
(51) Int. Cl.: G06Q 10/06, G06Q 10/0631, G06Q 10/0639, G05B 19/418

(54) **INFORMATION MANAGEMENT APPARATUS, INFORMATION MANAGEMENT METHOD, AND INFORMATION MANAGEMENT PROGRAM**
INFORMATIONSVERWALTUNGSVORRICHTUNG, INFORMATIONSVERWALTUNGSVERFAHREN UND INFORMATIONSVERWALTUNGSPROGRAMM
APPAREIL DE GESTION D'INFORMATIONS, PROCÉDÉ DE GESTION D'INFORMATIONS ET PROGRAMME DE GESTION D'INFORMATIONS

(30) Priority: 26.09.2022 JP 2022152948
(43) Date of publication of application: 27.03.2024
(73) Proprietor: Yokogawa Electric Corporation, Tokyo 180-8750 (JP)
(72) Inventor: KURODA, Tomohiro, Musashino-shi, Tokyo 180-8750 (JP); HAYASHIZAKI, Hironori, Musashino-shi, Tokyo 180-8750 (JP)
(74) Representative: Winter, Brandl - Partnerschaft mbB

(56) References cited:
- JP-A- 2018 081 637
- JP-A- 2020 135 307
- US-A1- 2013 275 187

## Description

### FIELD

The present disclosure relates to an information management apparatus, an information management method, and an information management program.

### BACKGROUND

Conventionally, in a constructed plant or a plant being constructed, an operation supervisor (appropriately referred to as a "supervisor") may assess a talent of a field worker (appropriately referred to as a "worker"). Here, the talent is an evaluation index that represents personality, such as hard working, good at sorting and cleaning, or good at following rules, operation accuracy, or the like.

Meanwhile, if the talent of the worker is assessed, the worker can realize how the worker is evaluated; therefore, it is expected to improve operational efficiency, operational reliability, motivation of the worker, or the like, so that it is possible to reduce a plant construction time and improve security during construction. However, the talent assessment technology as described above is not sufficient to encourage the worker to change behaviors for the purpose of talent assessment.

The present disclosure has been conceived in view of the foregoing situations, and an object of the present disclosure is to effectively encourage a worker to change behaviors. The invention is set out in the appended set of claims.

### SUMMARY

(1) According to an aspect of the embodiments, an information management apparatus includes a reception unit that receives worker identification information on a worker and evaluation information on the worker for whom a work status is evaluated by using a map in which location information on the worker is displayed, a giving unit that calculates, as a token, an evaluation value that corresponds to a work item indicated by the evaluation information, and gives, as the token, the evaluation value to the worker indicated by the worker identification information, and a recording unit that transmits history information that includes the worker identification information, a date and time at which the token is given, and the evaluation value to an information recording apparatus that records the history information on the token by using a blockchain.
(2) According to an aspect of the embodiments, the information management apparatus according to (1), further includes a use unit that performs one of evaluation of the worker and a purchase of an article that is used in a workplace of the worker, by using the token that is registered in the history information.
(3) According to an aspect of the embodiments, the information management apparatus according to (1) or (2), includes the reception unit that receives the worker identification information that is read from an article carried by the worker or that is transmitted from a terminal device of the worker, and the evaluation information in which the work status is evaluated for each of work items in a workplace of the worker, the giving unit that calculates, as the token, an evaluation value that corresponds to the work item indicated by the evaluation information, and gives, as the token, the evaluation value to the worker indicated by the worker identification information, and the recording unit that transmits the history information that includes the worker identification information, a date and time at which the token is given, and the evaluation value to an information recording apparatus that stores the history information on the token by using the blockchain.
(4) According to an aspect of the embodiments, the information management apparatus according to any one of (1) to (3), includes the reception unit receives the evaluation information in which the work status is evaluated by using the map in which the worker who is present in a floor that is selected from among a same floor, an upper floor, and a lower floor with reference to the supervisor is displayed.
(5) According to an aspect of the embodiments, the information management apparatus according to any one of (1) to (4), includes the recording unit that transmits the history information on the worker for a predetermined period to a terminal device of the worker if the token is given or a query is issued by the worker.
(6) According to an aspect of the embodiments, the information management apparatus according to any one of (1) to (5), includes the recording unit that transmits setting information related to one of a method of calculating the token and a method of giving the token to a terminal device of an administrator of the information management apparatus in response to a request from the administrator.
(7) According to an aspect of the embodiments, the information management apparatus according to any one of claims (1) to (6), further includes a notification unit that gives a notice for requesting a supervisor to give feedback of evaluation on the worker if occurrence of communication between the worker and a supervisor who has evaluated a work status of the worker is detected based on location information on the worker.
(8) According to an aspect of the embodiments, the information management apparatus according to (7), further includes an identification unit that identifies a horizontal position, a height position, and a posture of the worker by using location information that is transmitted from a terminal device carried by the worker and a detection unit that detects occurrence of communication between the worker and the supervisor who has evaluated the work status of the worker, based on the identified horizontal position, the identified height position, and the identified posture.
(9) According to an aspect of the embodiments, an information management method implemented by a computer, the information management method includes receiving worker identification information on a worker and evaluation information on the worker for whom a work status is evaluated by using a map in which location information on the worker is displayed, calculating, as a token, an evaluation value that corresponds to a work item indicated by the evaluation information, giving, as the token, the evaluation value to the worker indicated by the worker identification information, and transmitting history information that includes the worker identification information, a date and time at which the token is given, and the evaluation value to an information recording apparatus that records the history information on the token by using a blockchain.
(10) According to an aspect of the embodiments, an information management program causing a computer to execute processing includes receiving worker identification information on a worker and evaluation information on the worker for whom a work status is evaluated by using a map in which location information is displayed, calculating, as a token, an evaluation value corresponding to a work item indicated by the evaluation information, giving, as the token, the evaluation value to the worker indicated by the worker identification information, and transmitting history information that includes the worker identification information, a date and time at which the token is given, and the evaluation value to an information recording apparatus that records the history information on the token by using a blockchain.

### BRIEF DESCRIPTION OF THE DRAWINGS

FIG. 1 is a diagram illustrating a configuration example of an information processing system according to a first embodiment;
FIG. 2 is a block diagram illustrating a configuration example of each of apparatuses according to the first embodiment;
FIG. 3 is a diagram illustrating an example of an application storage unit of an application server according to the first embodiment;
FIG. 4 is a diagram illustrating an example of an evaluation information storage unit of the application server according to the first embodiment;
FIG. 5 is a diagram illustrating an example of a blockchain storage unit of a blockchain server according to the first embodiment;
FIG. 6 is a diagram illustrating a specific example of a display screen of a supervisor terminal of a supervisor according to the first embodiment;
FIG. 7 is a diagram illustrating a specific example of a display screen of a worker terminal of a worker according to the first embodiment;
FIG. 8 is a diagram illustrating a specific example of a display screen of an administrator terminal of an administrator according to the first embodiment;
FIG. 9 is a sequence diagram illustrating an example of the flow of information processing according to the first embodiment;
FIG. 10 is a diagram illustrating a configuration example of an information processing system according to a second embodiment;
FIG. 11 is a diagram illustrating a specific example of a display screen of a supervisor terminal of a supervisor according to the second embodiment;
FIG. 12 is a sequence diagram illustrating an example of the flow of information processing according to the second embodiment; and
FIG. 13 is a diagram illustrating a hardware configuration example.

### DESCRIPTION OF EMBODIMENTS

An information management apparatus, an information management method, and an information management program according to embodiments of the present disclosure will be described in detail below with reference to the drawings. The present disclosure is not limited by the embodiments described below.

### First Embodiment

In a first embodiment, a talent assessment process and a talent assessment result management process on a worker using a blockchain will be described. In the following, a configuration of an information processing system 100-1 according to the first embodiment, a configuration of each of apparatuses, and a flow of processes will be described in this order, and effects of the first embodiment will be described lastly.

### 1. Configuration of information processing system 100-1

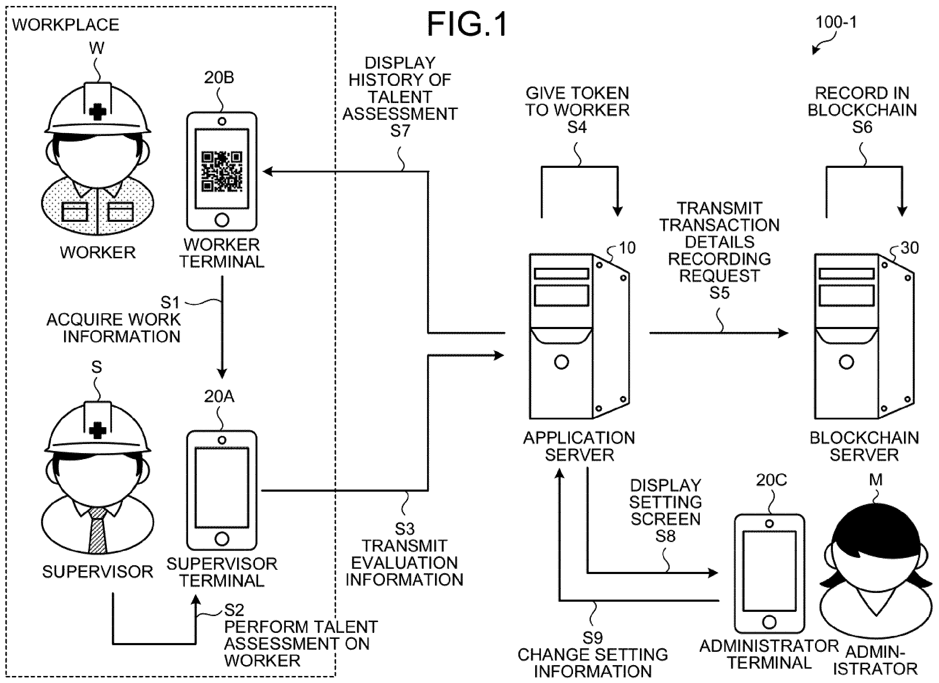

A configuration of the information processing system 100-1 according to the first embodiment will be described in detail with reference to FIG. 1. FIG. 1 is a diagram illustrating a configuration example of the information processing system 100-1 according to the first embodiment. An entire configuration example of the information processing system 100-1, processes performed by the information processing system 100-1, problems with an information processing system of a reference technology will be described below in this order, and effects of the information processing system 100-1 will be described lastly. Meanwhile, in the first embodiment, talent assessment in a plant, such as a constructed plant or a plant being constructed, will be described; however, a place of use and a field of use are not limited, and the technology may be applied to evaluation of a target person in an office, a school, a hospital, an athletic field, or the like.

### 1-1. Entire configuration example of information processing system 100-1

The information processing system 100-1 includes an application server 10 that is an information management apparatus, terminal devices 20 (a supervisor terminal 20A, a worker terminal 20B, and an administrator terminal 20C), and a blockchain server 30 that is an information recording apparatus. Here, the application server 10, the terminal devices 20, and the blockchain server 30 are communicably connected to one another via a predetermined communication network. Further, the supervisor terminal 20A is the terminal device 20 that is used by a supervisor S who supervises a workplace, the worker terminal 20B is the terminal device 20 that is used by a worker W who works in the workplace, and the administrator terminal 20C is the terminal device 20 that is used by an administrator M who manages the information processing system 100-1. Furthermore, the supervisor terminal 20A and the worker terminal 20B are used in the workplace, such as a plant.

The information processing system 100-1 illustrated in FIG. 1 may include the plurality of application servers 10 or the plurality of blockchain servers 30. Further, the application server 10 may be integrated with the blockchain server 30. Meanwhile, the application server 10 and the blockchain server 30 are not limited to physical servers that are connected to each other by an Internet line or the like, but may be server apparatuses that are constructed in a cloud environment, or physical servers, virtual machines, containers, or the like that are constructed in an on-premise environment.

### 1-2. Entire process performed by information processing system 100-1: face-to-face assessment and management process

A talent assessment process and a talent assessment management process in the information processing system 100-1 as described above will be described below. Meanwhile, processes from Steps S1 to S9 below may be performed in different order. Further, some of the processes from Steps S1 to S9 below may be omitted.

### 1-2-1. Talent assessment process

The talent assessment process for giving a transactable token to the worker W and performing recording by using a blockchain will be described below.

### 1-2-1-1. Worker information acquisition process

The supervisor terminal 20A acquires worker information on a talent assessment target (Step S1). For example, the supervisor S reads a QR code (registered trademark) that is displayed on the worker terminal 20B carried by the worker W by using a camera function of the supervisor terminal 20A, and the supervisor terminal 20A acquires the worker information on the worker W. Here, the worker information is identification information, such as a worker ID. In this case, the supervisor S may read the QR code (registered trademark) that is attached to a helmet or the like of the worker W by using the camera function of the supervisor terminal 20A, or read an Integrated Circuit (IC) tag carried by the worker W by using a reader function of the supervisor terminal 20A.

### 1-2-1-2. Input information acquisition process

The supervisor terminal 20A acquires input information on talent assessment (Step S2). For example, the supervisor S selects an evaluation item of the worker W displayed on the supervisor terminal 20A, and the supervisor terminal 20A acquires the input information on the worker W with respect to the evaluation item. In this case, the supervisor terminal 20A generates evaluation information that is a talent assessment result by associating the worker information and the input information on the worker W.

### 1-2-1-3. Evaluation information transmission process

The supervisor terminal 20A transmits the evaluation information to the application server 10 (Step S3). For example, the supervisor S performs tap operation on a button for confirming talent assessment displayed on the supervisor terminal 20A, and the supervisor terminal 20A transmits the evaluation information to the application server 10.

### 1-2-1-4. Token giving process

The application server 10 gives a token to the worker W (Step S4). For example, the application server 10 calculates an evaluation value from a type or the number of evaluation items indicated by the received evaluation information on the worker W, and gives the evaluation value as the token.

### 1-2-1-5. Recoding request transmission process

The application server 10 transmits a transaction details recording request to the blockchain server 30 (Step S5). For example, the application server 10 transmits the identification information on the worker W, a date and time at which the token is given, the evaluation value of the token, and the like as transaction details, and transmits a recording request for the transaction details.

### 1-2-1-6. Blockchain recording process

The blockchain server 30 records the transaction details in a blockchain (Step S6). For example, the blockchain server 30 generates new blockchain information by adding transaction details to blockchain information on each of workplaces.

With use of the blockchain technology as described above, data is stored in a distributed manner in servers that are geographically distant from one another, so that certain advantages are achieved such that the recorded data is not lost and operation is continued even if a part of the servers is hacked. Further, in the blockchain technology as described above, a data storage unit called a block is generated in a certain time, and it is possible to hold a data verification model, such as consensus and algorithm (consensus building), that is stored among the servers.

### 1-2-2. Talent assessment management process

The talent assessment management process that makes it possible to display the recorded talent assessment result and change setting related to the talent assessment will be described below.

### 1-2-2-1. Talent assessment history checking process

The application server 10 displays a history of talent assessment results for the worker W on the worker terminal 20B (Step S7). For example, the application server 10 receives a transmission request for talent assessment results from the worker terminal 20B of the worker W, searches for the evaluation information as the talent assessment results of the worker W, and transmits the evaluation information corresponding to a designated period to the worker terminal 20B. In this case, the worker terminal 20B displays the history of the talent assessment results by using the evaluation information that is acquired from the application server 10. Further, the supervisor terminal 20A and the administrator terminal 20C are able to display the history of the talent assessment results in the same manner, within the scope of given viewing authority.

### 1-2-2-2. Setting change process for talent assessment

The application server 10 displays a setting screen related to talent assessment on the administrator terminal 20C (Step S8). For example, the application server 10 receives a transmission request for setting information that is information on the setting screen from the administrator terminal 20C of the administrator M, and transmits the setting information to the administrator terminal 20C. In this case, the administrator terminal 20C displays the setting screen related to talent assessment by using the setting information that is acquired from the application server 10. Here, the administrator terminal 20C displays, as the setting screen, a talent assessment item, an amount of token to be given at the time of assessment, an upper limit of the number of times of assessment (for each day or for each month), a notification time period, a template, or the like.

The administrator terminal 20C transmits the changed setting information to the application server 10 (Step S9). For example, the administrator terminal 20C transmits the changed setting information, which is changed by the administrator M by changing the setting information that is displayed on the administrator terminal 20C, to the application server 10. In this case, the application server 10 updates the setting information by using the setting information that is acquired from the administrator terminal 20C.

### 1-3. Reference technologies

Problems with JP 2018 081637 A, Japanese Laid-open Patent Publication No. 2022-013990, Japanese Laid-open Patent Publication No. 2022-020942, Japanese Patent No. 6533868 and ITmedia NEWS, "Smartphone application that gives a solution to "What floor am I on in the building", Height estimation by atmospheric pressure and location information, utilized for advertisement and security", [online], [searched on August 4, 2022], Internet <URL: https://www.itmedia.co.jp/news/articles/2108/25/news082.html> that are reference technologies will be described below. Moreover, A, US 2013 0275187 A1 and JP 2020 135307 A are known.

### 1-3-1. Problem with reference technologies

JP 2018 081637 A discloses a workplace management system comprising a plurality of access points installed at different positions in a work area; a management server connected to each access point; and a radio communication module that is carried by each worker and that periodically transmits a radio signal including a unique ID associated with each worker, wherein each access point which has received this transmits data including the ID and a distance to the radio communication module to the management server which calculates the position of the radio communication module and stores the position and time in association with the ID of the worker in a position data storage part. However, there is a problem to record the history information in an immutable and tamper-proof manner.

Japanese Laid-open Patent Publication No. 2022-013990 and Japanese Laid-open Patent Publication No. 2022-020942 describe technologies that focus on change of behaviors, but the technologies do not focus on evaluate operating details and working attitudes.

Japanese Patent No. 6533868 describes a technology that focuses on evaluation of communication; however, in a workplace, workers who are present close to each other may only be working and are not always communicating with each other, and therefore, erroneous recognition may occur in this case.

ITmedia NEWS, "Smartphone application that gives a solution to "What floor am I on in the building", Height estimation by atmospheric pressure and location information, utilized for advertisement and security", [online], [searched on August 4, 2022], Internet <URL: https://www.itmedia.co.jp/news/articles/2108/25/news082.html> describes a technology that focuses on evaluation of a height, but a specific reference point is needed. However, while construction is being continued, a reference point is not always present, and, if work is performed at a high place, the technology is not applicable in a case in which a relative position with respect to a work supervisor is important in addition to classification, such as a second floor or a third floor.

### 1-4. Effects of information processing system 100-1

An overview of the information processing system 100-1 according to the first embodiment will be described first, and thereafter, effects of the information processing system 100-1 will be described.

### 1-4-1. Overview of information processing system 100-1

The information processing system 100-1 performs a talent assessment process as described below. Firstly, the supervisor terminal 20A acquires the worker information on the talent assessment target. Secondly, the supervisor terminal 20A acquires the input information on talent assessment. Thirdly, the supervisor terminal 20A transmits the evaluation information to the application server 10. Fourthly, the application server 10 gives a token to the worker W. Fifthly, the application server 10 transmits a recording request for transaction details to the blockchain server 30. Sixthly, the blockchain server 30 records the transaction details in a blockchain.

Further, in the information processing system 100-1, as a talent assessment history confirmation process, the application server 10 displays, on the worker terminal 20B, a history of talent assessment results of the worker W.

Furthermore, the information processing system 100-1 performs a talent assessment setting change process as described below. Firstly, the application server 10 displays the setting screen related to talent assessment on the administrator terminal 20C. Secondly, the administrator terminal 20C transmits the changed setting information to the application server 10.

### 1-4-2. Improvement achieved by information processing system 100-1

In the information processing system 100-1, the following improvement is expected. Firstly, it is possible to visualize the way of working, safety awareness, a degree of communication with other people, or the like with respect to the worker W by the talent assessment, and it is expected to improve productivity and safety by improving a state that is not desirable for the supervisor S or promote a desirable state. Secondly, by giving a token to the worker W in accordance with a behavior of the worker W and by using a blockchain as a recording destination of transacted tokens between the workers W, it is possible to adopt, as a target, a mechanism or an application for promoting "visualization" of characteristics of employee or communication, or for encouraging users belonging to each of communities to act autonomously. In view of the above, the information processing system 100-1 is able to effectively encourage the worker W to change behaviors.

### 2. Configuration of each of apparatuses in information processing system 100-1

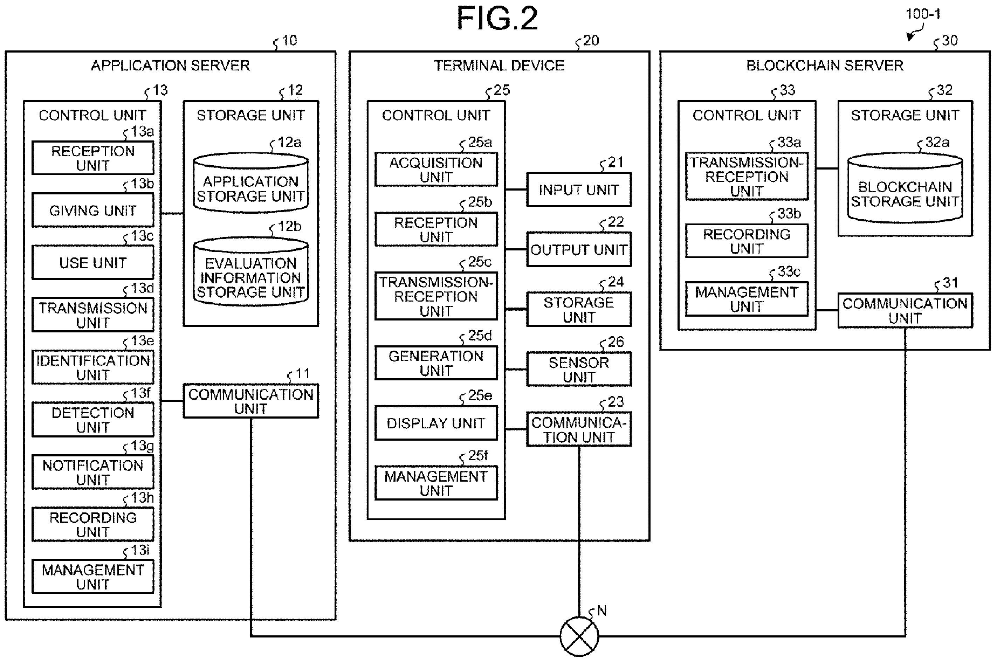

A functional configuration of each of the apparatuses included in the information processing system 100-1 illustrated in FIG. 1 will be described with reference to FIG. 2. FIG. 2 is a block diagram illustrating a configuration example of each of the apparatuses according to the first embodiment. In the following, an entire configuration example of the information processing system 100-1 according to the first embodiment will be described first, and thereafter, configuration examples of the application server 10, the terminal devices 20, and the blockchain server 30 according to the first embodiment will be described.

### 2-1. Entire configuration example of information processing system 100-1

As illustrated in FIG. 2, the information processing system 100-1 includes the application server 10, the terminal device 20, and the blockchain server 30. The application server 10 and the blockchain server 30 are communicably connected to each other by a predetermined communication network. Further, the terminal device 20 is communicably connected by a communication network N, such as an Internet line.

The information processing system 100-1 illustrated in FIG. 2 may include the plurality of application servers 10 or the plurality of blockchain servers 30. Further, the application server 10 may be integrated with the blockchain server 30. Meanwhile, the application server 10 and the blockchain server 30 are not limited to physical servers that are connected to each other by the Internet line or the like, but may be server apparatuses that are constructed in a cloud environment, or physical servers, virtual machines, containers, or the like that are constructed in an on-premise environment.

### 2-2. Configuration example of application server 10

A configuration example of the application server 10 that is an information management apparatus will be described below with reference to FIG. 2. For example, the application server 10 is implemented by a server, such as Apache or Nginx, that provides an application to a user and an Internet of Things (IoT) device.

The application server 10 includes a communication unit 11, a storage unit 12, and a control unit 13. Meanwhile, the application server 10 may include an input unit (for example, a keyboard, a mouse, or the like) that receives various kinds of operation from a system provider of the information processing system 100-1, or an output unit (for example, a liquid crystal display, or the like) for outputting various kinds of information.

### 2-2-1. Communication unit 11

The communication unit 11 controls data communication with other apparatuses. For example, the communication unit 11 performs data communication with each of communication apparatuses via a router or the like. Further, the communication unit 11 is able to perform data communication with a terminal of an operator (not illustrated).

The communication unit 11 performs data communication with each of communication apparatuses via a network (wired or wireless) by using an interface, such as a web Application programming Interface (API) or Representational State Transfer (REST) ful API. Further, the communication unit 11 is able to use, as the network, the Internet technology (HTTP or the like), an industrial communication standard (OPC or the like), a low-power wireless communication standard for IoT (LoRaWAN or the like), or the like.

### 2-2-2. Storage unit 12

The storage unit 12 stores therein various kinds of information that are referred to when the control unit 13 operates and various kinds of information that are acquired when the control unit 13 operates. The storage unit 12 includes an application storage unit 12a and an evaluation information storage unit 12b. Here, the storage unit 12 may be implemented by, for example, a semiconductor memory device, such as a Random Access Memory (RAM), a flash memory, or the like, a storage device, such as a hard disk or an optical disk, or the like. Meanwhile, in the example illustrated in FIG. 2, the storage unit 12 is arranged inside the application server 10; however, the storage unit 12 may be arranged outside the application server 10 or it may be possible to arrange a plurality of storage units. Further, it is possible to store a blockchain that is generated by a recording unit 13h of the control unit 13 (to be described later).

### 2-2-2-1. Application storage unit 12a

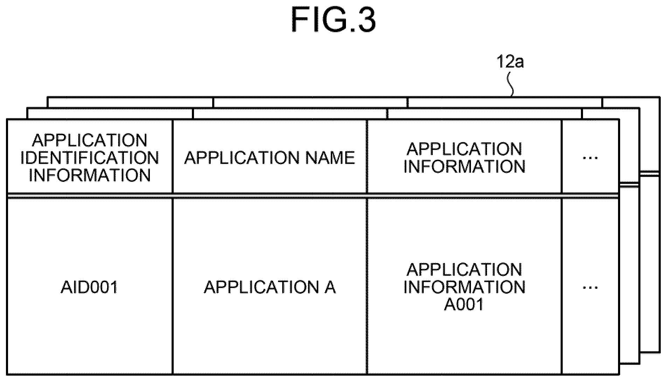

The application storage unit 12a stores therein applications that are provided by the terminal devices 20 carried by the supervisor S, the worker W, and the administrator M. An example of information that is stored in the application storage unit 12a will be described below with reference to FIG. 3. FIG. 3 is a diagram illustrating an example of the application storage unit 12a of the application server 10 according to the first embodiment. In the example illustrated in FIG. 3, the application storage unit 12a includes items of "application identification information", an "application name", "application information", and the like.

The "application identification information" indicates identification information for identifying an application, and is, for example, an identification number or an identification sign of the application. The "application name" is a description of the application, which is displayed when the application is provided to a user. The "application information" is software data of the application that is provided to the user.

Specifically, in FIG. 3, an example is illustrated in which, with respect to an application that is identified by application identification information of "AID001", an "application A" is stored as the application name and "application information A001" is stored as the application information.

### 2-2-2-2. Evaluation information storage unit 12b

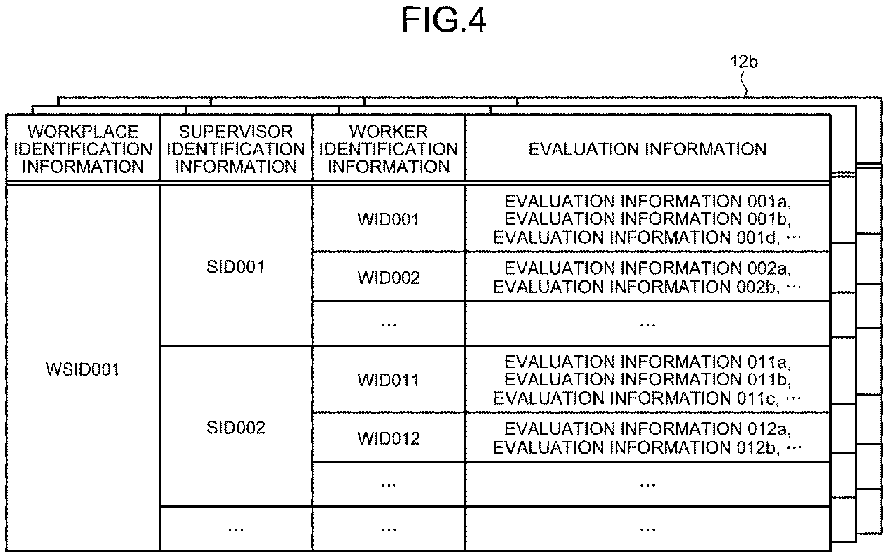

The evaluation information storage unit 12b stores therein a talent assessment result for each of the workers W. An example of information that is stored in the evaluation information storage unit 12b will be described below with reference to FIG. 4. FIG. 4 is a diagram illustrating an example of the evaluation information storage unit 12b of the application server 10 according to the first embodiment. In the example in FIG. 4, the evaluation information storage unit 12b includes items of "workplace identification information", "supervisor identification information", "worker identification information", "evaluation information", and the like.

The "workplace identification information" indicates identification information for identifying a workplace, and is, for example, an identification number or an identification sign of the workplace. The "supervisor identification information" indicates identification information for identifying the supervisor S, and is, for example, an identification number or an identification sign of the supervisor S. The "worker identification information" indicates identification information for identifying the worker W, and is, for example, an identification number or an identification sign of the worker W. The "evaluation information" indicates a result of talent assessment that is performed by the supervisor S for the worker W, and is, for example, a work item for which the talent assessment is performed, a date and time at which the assessment is performed, or the like.

Specifically, in FIG. 4, an example is illustrated in which, in a workplace that is identified by workplace identification information of "WSID001", talent assessment results are obtained by a supervisor S1 who is identified by supervisor identification information of "SID001" such that a talent assessment result for a worker W1 who is identified by worker identification information of "WID001" is [evaluation information: evaluation information 001a, evaluation information 001b, evaluation information 001d,...] and a talent assessment result for a worker W2 who is identified by worker identification information of "WID002" is [evaluation information: the evaluation information 002a, evaluation information 002b, ...], ..., and talent assessment results are obtained by a supervisor S2 who is identified by supervisor identification information of "SID002" such that a talent assessment result for a worker W11 who is identified by worker identification information of "WID001 1" is [evaluation information: evaluation information 011a, evaluation information 011b, evaluation information 011c, ...] and a talent assessment result for a worker W12 who is identified by worker identification information of "WID0012" is [evaluation information: evaluation information 012a, evaluation information 012b, ...], ....

### 2-2-3. Control unit 13

The control unit 13 manages entire control of the application server 10. The control unit 13 includes a reception unit 13a, a giving unit 13b, a use unit 13c, a transmission unit 13d, an identification unit 13e, a detection unit 13f, a notification unit 13g, the recording unit 13h, and a management unit 13i. Here, the control unit 13 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-3-1. Reception unit 13a

The reception unit 13a receives the evaluation information on a worker for whom a work status is evaluated. For example, the reception unit 13a receives the worker identification information that is read from an article carried by the worker W or that is transmitted from the worker terminal 20B of the worker W, and receives the evaluation information in which the work status is evaluated for each of work items in the workplace of the worker W.

As a specific example of the worker identification information, the reception unit 13a receives the worker identification information that is read from a QR code (registered trademark) that is displayed on the worker terminal 20B of the worker W, a barcode that is attached to a helmet of the worker W, or an IC tag that is carried by the worker W, by using a camera function or a tag reader function of the supervisor terminal 20A.

As a specific example of the evaluation information, the reception unit 13a receives the evaluation information [the evaluation information 001a, the evaluation information 001b, and the evaluation information 001d] on the worker W1 for each of the work items, which is transmitted from the supervisor terminal 20A by the supervisor S, by selecting the display screen of the supervisor terminal 20A.

### 2-2-3-2. Giving unit 13b

The giving unit 13b gives a token based on the received evaluation information to the worker W. For example, the giving unit 13b calculates, as the token, an evaluation value that corresponds to a work item indicated by the evaluation information, and gives the evaluation value, as the token, to the worker W indicated by the worker identification information.

As a specific example, if the evaluation information on the worker W1 is the "evaluation information 001a", the giving unit 13b gives, as the evaluation value, a point "1" that is set for a corresponding work item of "work item 001a". Similarly, if the evaluation information on the worker W1 is the "evaluation information 001b", the giving unit 13b gives, as the evaluation value, a point "2" that is set for a corresponding work item of "work item 001b", and if the evaluation information on the worker W1 is the "evaluation information 001d", the giving unit 13b gives, as the evaluation value, a point "4" that is set for a corresponding work item of "work item 001d".

### 2-2-3-3. Use unit 13c

The use unit 13c evaluates the worker W or purchases an article that is used in the workplace of the worker W by using a token that is registered in history information. For example, the use unit 13c is able to evaluate the worker W by using the token that is registered in the history information, and generate an evaluation sheet for calculating a salary and a bonus of the worker W. Further, the use unit 13c purchase an article that is used in the workplace of the worker W by using the token that is registered in the history information. In other words, the use unit 13c is able to purchase a food or drink in the workplace by using a remaining amount of token, and, if the remaining amount of token is transacted between the workers W, the use unit 13c is able to manage transaction details of the token and reflect the transaction in the history information on the token of the worker W.

### 2-2-3-4. Transmission unit 13d

The transmission unit 13d transmits various kinds of information. For example, the transmission unit 13d may transmit the history information on the token and a recording request (request) for the history information on the token to the blockchain server 30.

### 2-2-3-5. Identification unit 13e

The identification unit 13e identifies positions and heights of the worker W and the supervisor S by using location information on the worker W and the supervisor S. Meanwhile, details of processes performed by the identification unit 13e will be described in detail later in a second embodiment.

### 2-2-3-6. Detection unit 13f

The detection unit 13f detects occurrence of communication between the worker W and the supervisor S. Meanwhile, details of processes performed by the detection unit 13f will be described in detail later in the second embodiment.

### 2-2-3-7. Notification unit 13g

The notification unit 13g notifies the terminal device 20 of various kinds of information. Meanwhile, details of processes performed by the notification unit 13g will be described in detail later in the second embodiment.

### 2-2-3-8. Recording unit 13h

The recording unit 13h records the history information on the token that is given to the worker W, by using a blockchain. In this case, the recording unit 13h stores the blockchain, in which the history information on the token is recorded, in a storage area (not illustrated) of the storage unit 12. Specifically, if the application server 10 is integrated with the blockchain server 30, the recording unit 13h of the application server 10 generates the blockchain.

Further, the recording unit 13h transmits the history information on the token that is given to the worker W to the blockchain server 30 that is an information recording apparatus for recording the history information on the token by using the blockchain. For example, the recording unit 13h transmits the history information that includes the worker identification information, a date and time at which the token is given, and the evaluation value to the blockchain server 30 that records the history information on the token by using the blockchain. In this case, the recording unit 13h transmits the history information and a recording request for the history information to the blockchain server 30 that performs recording. In other words, if the application server 10 is separated from the blockchain server 30, a recording unit 33b of the blockchain server 30 (to be described later) generates the blockchain.

As a specific example, the recording unit 13h generates, as a blockchain for a workplace 1 that is identified by workplace identification information of "WSID001", a blockchain containing [the worker W1: a token "1", the worker W1: a token "2", the worker W1: a token "4", the worker W2: a token "1", the worker W2: a token "2", ...] in which the workers W and the evaluation values of the tokens are associated with each other in order of given date and time.

Further, the recording unit 13h generates a blockchain for each unit that is set by the administrator M. For example, the recording unit 13h may generate a blockchain for each work group unit, may generate a blockchain for each workplace unit, or may generate a blockchain for each system unit in which the same application server 10 is used.

If a token is given or if a query is received from the worker W, the recording unit 13h transmits the history information on the worker W corresponding to a predetermined period to the worker terminal 20B that is the terminal device 20 of the worker W. For example, if the giving unit 13b gives a token to the worker W, the recording unit 13h transmits an evaluation value of the given token to the worker terminal 20B. Further, if the reception unit 13a receives a query about tokens that were given in a last one month from the worker W, the recording unit 13h transmits a list of evaluation values of tokens that were given in last one month to the worker terminal 20B. Meanwhile, a display screen based on the history information will be described later in a section 2-4. Specific examples of display screen and a section 2-4-2. Display screen of the worker terminal 20B.

The recording unit 13h transmits setting information on a token calculation method or a token gibing method to the administrator terminal 20C that is the terminal device of the administrator M, in response to a request from the administrator M of the application server 10 that is an information management apparatus. For example, if the reception unit 13a receives a request for the setting information on the token calculation method from the administrator M, the recording unit 13h transmits a list in which work items and evaluation values of tokens are associated to the administrator terminal 20C. Further, if the reception unit 13a receives a request for the setting information on the token giving method from the administrator M, the recording unit 13h transmits a list that indicates a maximum evaluation value given to the token or a maximum number of tomes of token giving per month for each workplace to the administrator terminal 20C. Meanwhile, a display screen based on the setting information will be described later in the section 2-4. Specific example of display screen and a section 2-4-3. Display screen of the administrator terminal 20C.

### 2-2-3-9. Management unit 13i

The management unit 13i performs security management (user management, encryption, key management, authentication, and authorization). Firstly, the management unit 13i manages, as the user management, information, such as an accessible user ID or a password. Secondly, the management unit 13i performs, as the encryption, encryption and decryption of an electronic signature or data. For example, the management unit 13i uses an encryption algorithm, such as AES, SHA, RSA, or ECC. Thirdly, the management unit 13i manages, as the key management, keys (a public key and a secret key) for encrypting and decrypting data. For example, the management unit 13i performs the key management by using PKI or the like that is a public key encryption method for managing a pair of a secret key and a public key. Fourthly, the management unit 13i manages or controls authentication of a user, an access right to data, or the like as the authentication and authorization.

### 2-3. Configuration example of terminal device 20

A configuration example of the terminal device 20 that is used as the supervisor terminal 20A, the worker terminal 20B, and the administrator terminal 20C will be described below with reference to FIG. 2. For example, the terminal device 20 is implemented by a smartphone, a tablet terminal, a handy terminal, the notebook Personal Computer (PC), a desktop PC, a mobile phone, a Personal Digital Assistant (PDA), or the like. The terminal device 20 includes an input unit 21, an output unit 22, a communication unit 23, a storage unit 24, a control unit 25, and a sensor unit 26.

### 2-3-1. Input unit 21

The input unit 21 controls input of various kinds of information to the terminal device 20. The input unit 21 is, for example, a mouse, a keyboard, or the like, and receives input of the setting information or the like to the terminal device 20.

### 2-3-2. Output unit 22

The output unit 22 controls output of various kinds of information from the terminal device 20. The output unit 22 is, for example, a display or the like, and outputs the setting information or the like that is stored in the terminal device 20.

### 2-3-3. Communication unit 23

The communication unit 23 controls data communication with other apparatuses. For example, the communication unit 23 performs data communication with each of communication apparatuses via a router or the like. Further, the communication unit 23 is able to perform data communication with a terminal of an operator (not illustrated).

Furthermore, the communication unit 23 is able to perform data communication in a wired or wireless manner to establish connections with a plurality of sensors. For example, the communication unit 23 is able to use a signal transmission means, such as UART, as wired data communication. Moreover, the communication unit 23 is able to use Bluetooth (registered trademark) Low Energy (LE) or a contactless tag (RFID, NFC, or the like) as wireless data communication.

### 2-3-4. Storage unit 24

The storage unit 24 stores therein various kinds of information that are referred to when the control unit 25 operates and various kinds of information that are acquired when the control unit 25 operates. Here, the storage unit 24 may be implemented by, for example, a semiconductor memory device, such as a RAM, a flash memory, or the like, a storage device, such as a hard disk or an optical disk, or the like. Meanwhile, in the example illustrated in FIG. 2, the storage unit 24 is arranged inside the terminal device 20; however, the storage unit 24 may be arranged outside the terminal device 20 or it may be possible to arrange a plurality of storage units.

### 2-3-5. Control unit 25

The control unit 25 manages entire control of the terminal device 20. The control unit 25 includes an acquisition unit 25a, a reception unit 25b, a transmission-reception unit 25c, a generation unit 25d, a display unit 25e, and a management unit 25f. Here, the control unit 25 may be implemented by, for example, an electronic circuit, such as a CPU or an MPU, or an integrated circuit, such as an ASIC or an FPGA.

### 2-3-5-1. Acquisition unit 25a

The acquisition unit 25a acquires location information that may be used to identify a position. For example, the acquisition unit 25a acquires, as the location information, coordinates by a Global Positioning System (GPS) measured by the sensor unit 26 of the worker terminal 20B of the worker W, orientation obtained by a compass, or atmospheric pressure obtained by a barometer. Further, the acquisition unit 25a is able to process a sensor signal that is acquired from the sensor unit 26 and perform AD/DA conversion or data shaping.

### 2-3-5-2. Reception unit 25b

The reception unit 25b receives various kinds of information that are input by operation of the terminal device 20. For example, the reception unit 25b receives input information on talent assessment that is selected on a display screen by the supervisor S. Further, the reception unit 25b receives a change of the setting information on the talent assessment that is input through a display screen by the administrator M.

### 2-3-5-3. Transmission-reception unit 25c

The transmission-reception unit 25c transmits various kinds of information. For example, the transmission-reception unit 25c transmits the evaluation information to the application server 10. Further, the transmission-reception unit 25c receives various kinds of information. For example, the transmission-reception unit 25c receives the evaluation information and the setting information that are transmitted by the application server 10.

### 2-3-5-4. Generation unit 25d

The generation unit 25d generates map information based on the location information on the worker W and the supervisor S, which is transmitted from the application server 10. Meanwhile, details of a map generated by the generation unit 25d will be described later in the second embodiment.

### 2-3-5-5. Display unit 25e

The display unit 25e generates a display screen based on various kinds of information that are transmitted from the application server 10. Meanwhile, details of the screen displayed by the display unit 25e will be described later in the section 2-4. Specific example of display screen.

### 2-3-5-6. Management unit 25f

The management unit 25f performs security management (user management, encryption, key management, authentication, and authorization). Firstly, the management unit 25f manages, as the user management, information, such as an accessible user ID or a password. Secondly, the management unit 25f performs, as the encryption, encryption and decryption of an electronic signature or data. For example, the management unit 25f uses an encryption algorithm, such as AES, SHA, RSA, or ECC. Thirdly, the management unit 25f manages, as the key management, keys (a public key and a secret key) for encrypting and decrypting data. For example, the management unit 25f performs the key management by using PKI or the like that is a public key encryption method for managing a pair of a secret key and a public key. Fourthly, the management unit 25f manages or controls authentication of a user, an access right to data, or the like as the authentication and authorization.

### 2-3-6. Sensor unit 26

The sensor unit 26 measures various kinds of information that are detectable by the terminal device 20. For example, the sensor unit 26 measures coordinates by a GPS, measures orientation by a compass, and measures atmospheric pressure by a barometer.

### 2-4. Specific examples of display screen

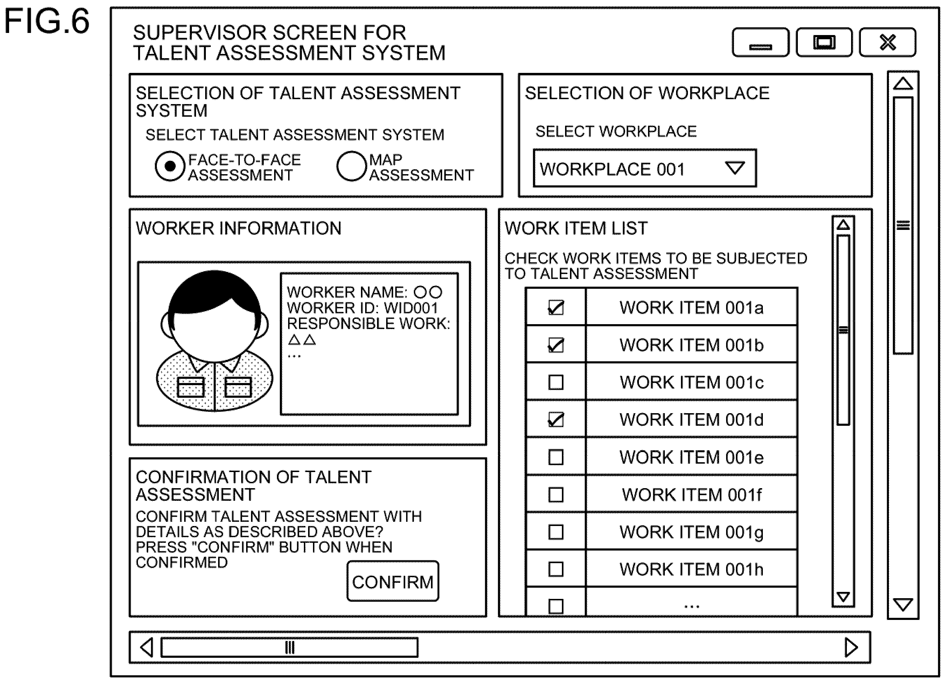

Specific examples of the display screen that is displayed by the display unit 25e of the terminal device 20 of the first embodiment will be described below with reference to FIG. 6 to FIG. 8. **In** the following, the display screen of the supervisor terminal 20A of the supervisor S, the display screen of the worker terminal 20B of the worker W, and the display screen of the administrator terminal 20C of the administrator M will be described in this order.

### 2-4-1. Display screen of supervisor terminal 20A

A specific example of the display screen of the supervisor terminal 20A of the supervisor S of the first embodiment will be described below with reference to FIG. 6. FIG. 6 is a diagram illustrating a specific example of the display screen of the supervisor terminal 20A of the supervisor S according to the first embodiment. In the following, "selection of talent assessment system", "selection of workplace", "worker information", "work item list", and "confirmation of talent assessment" in a "supervisor screen for talent assessment system" will be described in this order.

### 2-4-1-1. Selection of talent assessment system

As illustrated in FIG. 6, the supervisor terminal 20A displays talent assessment methods in a selectable manner. In the example illustrated in FIG. 6, the supervisor terminal 20A displays a message of "select talent assessment system" and "face-to-face assessment" for performing talent assessment face-to-face with the worker W and "map assessment" for performing talent assessment of the worker W on a map, as the talent assessment methods, by radio buttons in a selectable manner.

### 2-4-1-2. Selection of workplace

As illustrated in FIG. 6, the supervisor terminal 20A displays, in a selectable manner, workplaces of the worker W to be subjected to the talent assessment. In the example illustrated in FIG. 6, the supervisor terminal 20A displays a message of "select workplace" and identification numbers or the like of workplaces, such as "workplace 001", by a pull-down menu in a selectable manner.

### 2-4-1-3. Worker information

As illustrated in FIG. 6, the supervisor terminal 20A displays the worker information on the worker W, which is read from a QR code (registered trademark) or an IC tag. In the example illustrated in FIG. 6, the supervisor terminal 20A displays, as the worker information, a worker name of "∘∘", a worker ID of "WID001", a responsible work of "ΔΔ", and the like. In this case, the supervisor terminal 20A is able to display, as the worker information, an official position, an age, gender, a work history, or the like of the worker W.

### 2-4-1-4. Work item list

As illustrated in FIG. 6, the supervisor terminal 20A displays a list of work items in the workplace that is selected in the section of workplace as described above. In the example illustrated in FIG. 6, the supervisor terminal 20A displays a message of "check work items to be subjected to talent assessment" and a work item list in which a selectable checkbox is provided for each of the work items. In this case, the supervisor S is able to select an item to be subjected to the talent assessment by checking the checkbox of the work item to be subjected to the talent assessment of the worker W.

### 2-4-1-5. Confirmation of talent assessment

As illustrated in FIG. 6, if one or more items to be subjected to the talent assessment are selected in the work item list as described above, the supervisor terminal 20A displays a message or a button for confirming the talent assessment. In the example illustrated in FIG. 6, the supervisor terminal 20A displays a message of "Confirm talent assessment with details as described above? Press "confirm" button when confirmed" and displays a "confirm" button. In this case, the supervisor S is able to confirm the worker W and the work items to be subjected to the talent assessment by performing tap operation on the "confirm" button.

### 2-4-1-6. Others

FIG. 6 illustrates an example in which the screen of the "supervisor screen for talent assessment system" is divided and "selection of talent assessment system", "selection of workplace", "worker information", "work item list", and "confirmation of talent assessment" are displayed simultaneously, but a display method is not specifically limited. For example, the supervisor terminal 20A may display each of the screens such that "selection of talent assessment system", "selection of workplace", "worker information", "work item list", and "confirmation of talent assessment" are sequentially displayed in this order every time the supervisor S taps the screen.

### 2-4-2. Display screen of worker terminal 20B

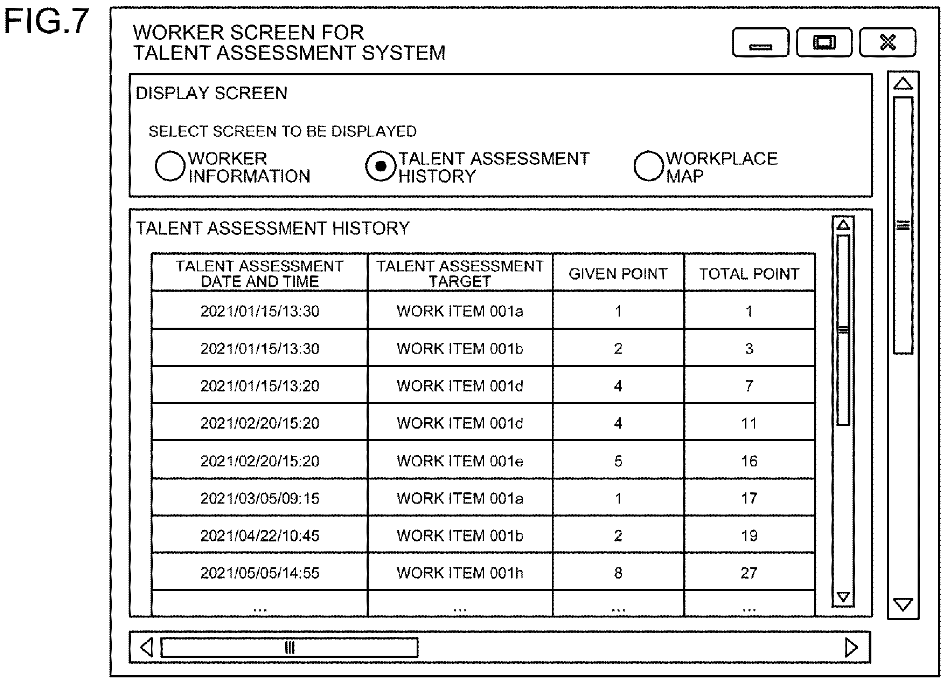

A specific example of the display screen of the worker terminal 20B of the worker W of the first embodiment will be described below with reference to FIG. 7. FIG. 7 is a diagram illustrating a specific example of the display screen of the worker terminal 20B of the worker W according to the first embodiment. In the following, a "display screen" and a "talent assessment history" in a "worker screen for talent assessment system" will be described in this order.

### 2-4-2-1. Display screen

As illustrated in FIG. 7, the worker terminal 20B displays display screens in a selectable manner. In the example illustrated in FIG. 7, the worker terminal 20B displays a message of "select screen to be displayed" and displays, as the displays screens, "worker information" for displaying the worker information on the worker W, "talent assessment history" for displaying a talent assessment history of the worker W, and a "workplace map" for displaying a map of a workplace in which the worker W is working, by radio buttons in a selectable manner.

### 2-4-2-2. Talent assessment history

As illustrated in FIG. 7, the worker terminal 20B displays a talent assessment history that is selected by the display screen as described above. In the example illustrated in FIG. 7, the worker terminal 20B displays a "talent assessment date and time" at which the talent assessment is performed, a "talent assessment target" that is a work item subjected to the talent assessment, a "given point" that is an evaluation value of the given token, and a "total point" that is a total of the evaluation values of the given tokens, in order of talent assessment. In this case, the worker terminal 20B may display a line graph or a bar graph of the talent assessment history.

### 2-4-2-3. Others

The worker W is able to confirm the worker information on the worker W in the display screen of the "worker information". Further, the worker W is able to confirm current positions of the worker W and the supervisor S, positions of installed devices, and the like in the display screen of the "workplace map".

FIG. 7 illustrates an example in which the screen of the "worker screen for talent assessment system" is divided and the "display screen" and the "talent assessment history" are displayed simultaneously, but a display method is not specifically limited. For example, the worker terminal 20B may display each of the screens such that the "display screen" and the "talent assessment history" are sequentially displayed in this order every time the worker W taps the screen.

### 2-4-3. Display screen of administrator terminal 20C

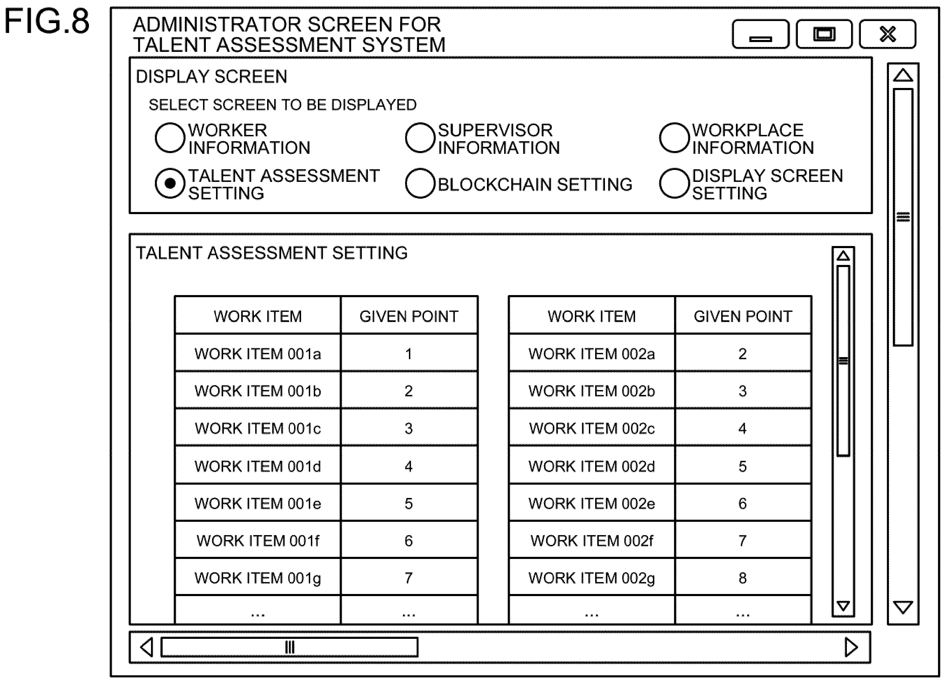

A specific example of the display screen of the administrator terminal 20C of the administrator M will be described below with reference to FIG. 8. FIG. 8 is a diagram illustrating a specific example of the display screen of the administrator terminal 20C of the administrator M according to the first embodiment. In the following, a "display screen" and "talent assessment setting" in an "administrator screen for talent assessment system" will be described in this order.

### 2-4-3-1. Display screen

As illustrated in FIG. 8, the administrator terminal 20C displays display screens in a selectable manner. In the example illustrated in FIG. 8, the administrator terminal 20C displays a message of "select screen to be displayed" and displays, as the display screens, "worker information" for displaying the worker information on the worker W, "supervisor information" for displaying supervisor information on the supervisor S, "workplace information" for displaying workplace information on the workplace, "talent assessment setting" for displaying a setting screen related to talent assessment, "blockchain setting" for displaying a setting screen related to a blockchain, and "display screen setting" for displaying a setting screen related to a display screen of the entire terminal device 20, by radio buttons in a selectable manner.

### 2-4-3-2. Talent assessment setting

As illustrated in FIG. 8, the administrator terminal 20C displays a talent assessment setting that is selected in the display screen as described above. In the example illustrated in FIG. 8, the administrator terminal 20C displays a list of a "work item" that is a talent assessment target and a "given point" that is an evaluation value of a token corresponding to the work item. In this case, the administrator M is able to change the evaluation value of the token that is given at the time of talent assessment by modifying the value of the given point.

### 2-4-3-3. Others

The administrator M is able to change or add the worker information on the worker W in the display screen for the "worker information". Further, the administrator M is able to change or add the supervisor information on the supervisor S in the display screen for the "administrator information". Furthermore, the administrator M is able to change or add the map information on the map of the workplace and change or add the worker W or the supervisor S who is assigned to the workplace in the display screen for the "workplace information". Moreover, the administrator M is able to change a generation unit for a blockchain (a group unit, a workplace unit, an entire system unit, or the like) in the display screen for the "blockchain setting". Furthermore, the administrator M is able to change items and a layout of the display screen to be displayed, for each of the supervisor terminal 20A, the worker terminal 20B, and the administrator terminal 20C in the display screen for the "display screen setting".

FIG. 8 illustrates an example in which the screen of the "administrator screen for talent assessment system" is divided and the "display screen" and the "talent assessment setting" are displayed simultaneously, but a display method is not specifically limited. For example, the administrator terminal 20C may display each of the screens such that the "display screen" and the "talent assessment setting" are sequentially displayed in this order every time the administrator M taps the screen.

### 2-5. Configuration of blockchain server 30

A configuration example of the blockchain server 30 that is an information recording apparatus will be described below with reference to FIG. 2. For example, the blockchain server 30 is implemented by a server that constitutes a blockchain network by using a platform of the blockchain.

The blockchain server 30 includes a communication unit 31, a storage unit 32, and a control unit 33. Meanwhile, the blockchain server 30 may include an input unit (for example. a keyboard, a mouse, or the like) that receives various kinds of operation from a system provider of the information processing system 100-1, or an output unit (for example, a liquid crystal display, or the like) for outputting various kinds of information.

### 2-5-1. Communication unit 31

The communication unit 31 controls data communication with other apparatuses. For example, the communication unit 31 performs data communication with each of communication apparatuses via a router or the like. Further, the communication unit 31 is able to perform data communication with a terminal of an operator (not illustrated).

The communication unit 31 performs data communication with each of the communication apparatuses via a network (wired or wireless) by an interface, such as RESTful API. Further, the communication unit 31 is able to use, as the network, the Internet technology (HTTP or the like), an industrial communication standard (OPC or the like), a low-power wireless communication standard for IoT (LoRaWAN or the like), or the like.

### 2-5-2. Storage unit 32

The storage unit 32 stores therein various kinds of information that are referred to when the control unit 33 operates and various kinds of information that are acquired when the control unit 33 operates. The storage unit 32 includes a blockchain storage unit 32a. Here, the storage unit 32 may be implemented by, for example, a semiconductor memory device, such as a RAM, a flash memory, or the like, a storage device, such as a hard disk or an optical disk, or the like. Meanwhile, in the example illustrated in FIG. 2, the storage unit 32 is arranged inside the blockchain server 30; however, the storage unit 32 may be arranged outside the blockchain server 30 or it may be possible to arrange a plurality of storage units.

### 2-5-2-1. Blockchain storage unit 32a

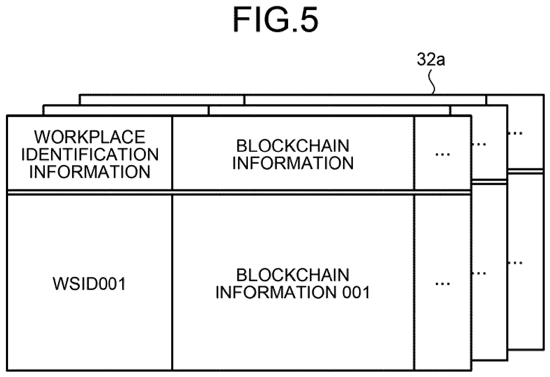

The blockchain storage unit 32a stores therein the blockchain in which transaction details are recorded by the recording unit 33b of the control unit 33 (to be described later). An example of information that is stored in the blockchain storage unit 32a will be described below with reference to FIG. 5. FIG. 5 is a diagram illustrating an example of the blockchain storage unit 32a of the blockchain server 30 according to the first embodiment. In the example illustrated in FIG. 5, the blockchain storage unit 32a includes items such as "workplace identification information" and "blockchain information".

The "workplace identification information" indicates identification information for identifying a workplace, and is, for example, an identification number or an identification sign of the workplace. The "blockchain information" is blockchain data in which the history information on tokens given to the worker W is recorded as a blockchain in units of workplaces.

Specifically, FIG. 5 illustrates an example in which blockchain information of "blockchain information 001" is stored in which history information on tokens that are given to all of workers in a workplace that is identified by workplace identification information of "WSID001" is recorded.

The blockchain as described above is implemented by a technology, such as Ethereum or Hyperledger. Further, as for a consensus algorithm that ensures data tamper resistance, a certain method, such as Proof of Work (PoW) or Proof of Authority (PoA), may be applied. Furthermore, the blockchain as described above is a smart contract that automatically executes value exchange. In other words, when an added value that is calculated by an added value calculation function is to be automatically executed, it is possible to represent and circulate a value that is exchanged between stakeholders as digital data, such as a token or cryptocurrency. Meanwhile, the technology as described above is included in a representative blockchain, such as Ethereum or HyperledgerFabric.

### 2-5-3. Control unit 33

The control unit 33 manages entire control of the blockchain server 30. The control unit 33 includes a transmission-reception unit 33a, the recording unit 33b, and a management unit 33c. Here, the control unit 33 may be implemented by, for example, an electronic circuit, such as a CPU or an MPU, or an integrated circuit, such as an ASIC or an FPGA.

### 2-5-3-1. Transmission-reception unit 33a

The transmission-reception unit 33a transmits various kinds of information. Further, the transmission-reception unit 33a receives various kinds of information. For example, the transmission-reception unit 33a receives history information or a recording request that is transmitted by the application server 10.

### 2-2-5-2. Recording unit 33b

The recording unit 33b records the history information on tokens that are given to the worker W, by using the blockchain. In this case, the recording unit 33b stores the blockchain, in which the history information on tokens is recorded, in the blockchain storage unit 32a.

### 2-2-5-3. Management unit 33c

The management unit 33c performs security management (user management, encryption, key management, authentication, and authorization). Firstly, the management unit 33c manages, as the user management, information, such as an accessible user ID or a password. Secondly, the management unit 33c performs, as the encryption, encryption and decryption of an electronic signature or data. For example, the management unit 33c uses an encryption algorithm, such as AES, SHA, RSA, or ECC. Thirdly, the management unit 33c manages, as the key management, keys (a public key and a secret key) for encrypting and decrypting data. For example, the management unit 33c performs the key management by using PKI or the like that is a public key encryption method for managing a pair of a secret key and a public key. Fourthly, the management unit 33c manages or controls authentication of a user, an access right to data, or the like as the authentication and authorization.

### 3. Flow of processes performed by the information processing system 100-1

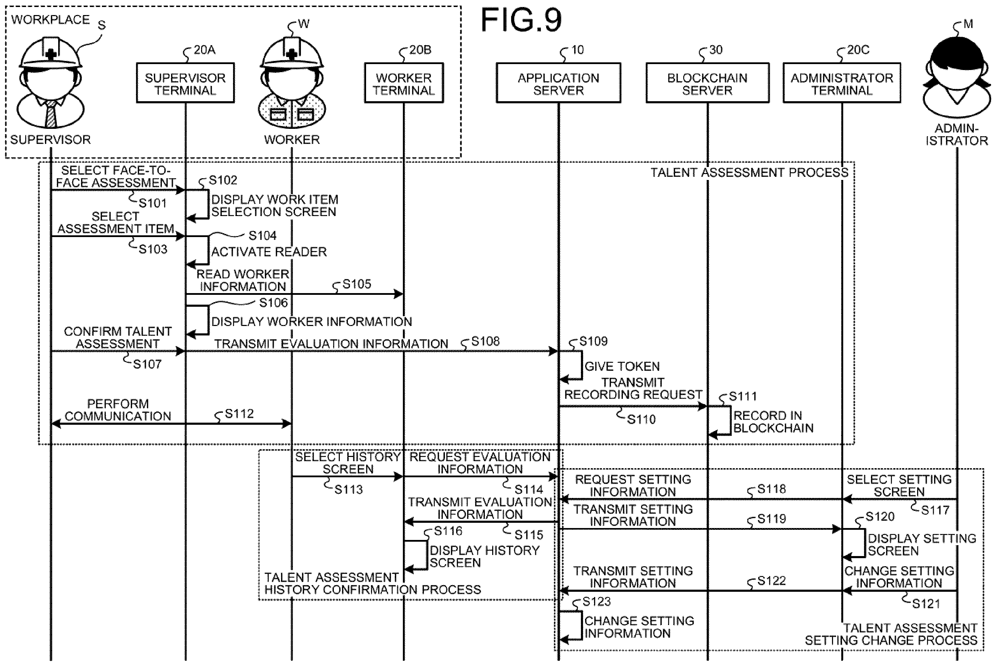

A flow of processes performed by the information processing system 100-1 according to the first embodiment will be described below with reference to FIG. 9. FIG. 9 is a sequence diagram illustrating an example of the flow of information processing according to the first embodiment. Meanwhile, processes from Steps S101 to S123 may be performed in different order. Further, some of the processes from Steps S101 to S123 below may be omitted.

### 3-1. Talent assessment process

Firstly, the supervisor S selects face-to-face assessment on the supervisor terminal 20A (Step S101). Secondly, the supervisor terminal 20A displays a work item selection screen on the supervisor terminal 20A (Step S102). Thirdly, the supervisor S selects an assessment item on the supervisor terminal 20A (Step S103). Fourthly, the supervisor terminal 20A activates a reader (Step S104). Fifthly, the supervisor terminal 20A reads the worker information by using the reader (Step S105). Sixthly, the supervisor terminal 20A displays the worker information on the supervisor terminal 20A (Step S106). Seventhly, the supervisor S confirms talent assessment on the supervisor terminal 20A (Step S107). Eighthly, the supervisor terminal 20A transmits evaluation information to the application server 10 (Step S108). Ninthly, the application server 10 gives a token to the worker W (Step S109). Tenthly, the application server 10 transmits a recording request for token transaction details to the blockchain server 30 (Step S110). Eleventhly, the blockchain server 30 records the transaction details in the blockchain (Step S111). In this case, the supervisor S performs talent assessment face-to-face with the worker W, so that communication, such as feedback of evaluation, is performed (Step S112).

### 3-2. Talent assessment history confirmation process

Firstly, the worker W selects a history screen on the worker terminal 20B (Step S113). Secondly, the worker terminal 20B issues a request for the evaluation information to the application server 10 (Step S114). Thirdly, the application server 10 transmits the evaluation information to the worker W (Step S115). Fourthly, the worker terminal 20B displays the history screen of the worker W on the worker terminal 20B (Step S116).

### 3-3. Talent assessment setting change process

Firstly, the administrator M selects a setting screen on the administrator terminal 20C (Step S117). Secondly, the administrator terminal 20C issues a request for the setting information to the application server 10 (Step S118). Thirdly, the application server 10 transmits the setting information to the administrator M (Step S119). Fourthly, the administrator terminal 20C displays a setting screen on the administrator terminal 20C (Step S120). Fifthly, the administrator M changes the setting information on the administrator terminal 20C (Step S121). Sixthly, the administrator terminal 20C transmits the changed setting information to the application server 10 (Step S122). Seventhly, the application server 10 reflects the received setting information and changes setting information (Step S123).

### 4. Effects of first embodiment

Lastly, effects of the first embodiment will be described below. First to fifth effects corresponding to the processes of the present embodiment will be described below.

### 4-1. First effect

Firstly, in the process according to the first embodiment as described above, the evaluation information on the worker W for whom a work status is evaluated is received, a token based on the received evaluation information is given to the worker W, and history information on the token given to the worker W is recorded by using a blockchain. Therefore, in this process, it is possible to effectively encourage the worker to change behaviors.

### 4-2. Second effect

Secondly, in the processes according to the first embodiment as described above, evaluation of the worker W or a purchase of an article used in a workplace of the worker W is performed by using the token that is registered in the history information. Therefore, in this process, it is possible to give incentives to the worker W and effectively encourage the worker W to change behaviors.

### 4-3. Third effect

Thirdly, in the processes according to the first embodiment as described above, the worker identification information that is read from an article carried by the worker W and the evaluation information in which a work status is evaluated for each of work items in the workplace of the worker W are received, the evaluation value corresponding to the work item indicated by the evaluation information is calculated as a token, the evaluation value is given to the worker W indicated by the worker identification information, and the worker identification information, the date and time at which the token is given, and the history information including the evaluation value are transmitted to the blockchain server 30 that records the history information on tokens by using a blockchain. Therefore, in this process, in face-to-face talent assessment, it is possible to effectively encourage the worker W to change behaviors.

### 4-4. Fourth effect

Fourthly, in the processes according to the first embodiment as described above, if a token is given or a query is received from the worker W, the history information on the worker W corresponding to a predetermined period is transmitted to the worker terminal 20B of the worker W. Therefore, in this process, the worker W is able to periodically check given tokens, so that it is possible to effectively encourage the worker W to change behaviors.

### 4-5. Fifth effect

Fifthly, in the processes according to the first embodiment as described above, the setting information related to a token calculation method or a token giving method is transmitted to the administrator terminal 20C of the administrator M, in response to a request from the administrator M of the application server 10. Therefore, in this process, the administrator M is able to periodically review a criterion of the talent assessment, so that it is possible to effectively encourage the worker W to change behaviors.

### Second Embodiment

In a second embodiment, a process that allows a talent assessment process on a map and provides remind information upon detection of communication between the worker W and the supervisor S will be described. In the following, a configuration of an information processing system 100-2 according to the second embodiment, a configuration of each of apparatuses, and a flow of processes will be described in this order, and effects of the second embodiment will be described lastly. Meanwhile, explanation of the same components and the same processes as those of the first embodiment will be omitted.

### 1. Configuration of information processing system 100-2

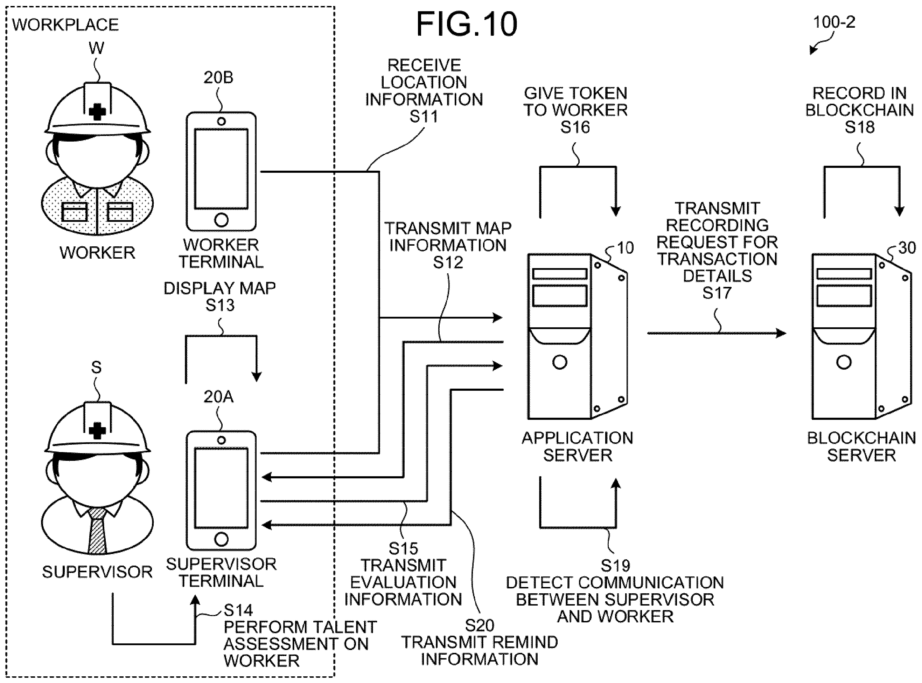

A configuration of the information processing system 100-2 according to the second embodiment will be described in detail with reference to FIG. 10. FIG. 10 is a diagram illustrating a configuration example of the information processing system 100-2 according to the second embodiment. Processes performed by the information processing system 100-2 and problems with an apparatus management system of a reference technology will be described below in this order, and effects of the information processing system 100-2 will be described lastly.

### 1-1. Entire process of information processing system 100-2: map assessment

A process of providing various kinds of information in the information processing system 100-2 as described above will be described below. Meanwhile, processes from Steps S11 to S20 may be performed in different order. Further, some of the processes from Steps S11 to S20 below may be omitted.

### 1-1-1. Location information reception process

The application server 10 receives the location information on the worker W from the worker terminal 20B, and receives the location information on the supervisor S from the worker terminal 20B (Step S11). In this case, the application server 10 receives the worker information on the worker W from the worker terminal 20B.

### 1-1-2. Talent assessment process

A talent assessment process for giving a transactable token to the worker W and recording the token by using a blockchain will be described below.

### 1-1-2-1. Map information transmission process

The application server 10 transmits the map information to the supervisor terminal 20A (Step S12). For example, the application server 10 generates map information (peripheral information) in which a positional relationship is identified from the location information on the supervisor S and the location information on the worker W, and transmits the map information to the supervisor terminal 20A.

### 1-1-2-2. Map display process

The supervisor terminal 20A displays a map (Step S13). For example, the supervisor terminal 20A displays a map that indicates a relative position of the worker W with reference to the position of the supervisor S, based on the map information that is acquired from the application server 10.

### 1-1-2-3. Input information acquisition process

The supervisor terminal 20A acquires input information on the talent assessment (Step S14). For example, the supervisor terminal 20A acquires the input information on the worker W with respect to an evaluation item by selecting the worker W on the map displayed on the supervisor terminal 20A and selecting the evaluation item. In this case, the supervisor terminal 20A generates the evaluation information that is a talent assessment result by associating the worker information on the worker W and the input information.

### 1-1-2-4. Evaluation information transmission process

The supervisor terminal 20A transmits the evaluation information to the application server 10 (Step S15). For example, the supervisor terminal 20A transmits the evaluation information to the application server 10 if the supervisor S performs tap operation on a button for confirming the talent assessment displayed on the supervisor terminal 20A.

### 1-1-2-5. Token giving process

The application server 10 gives a token to the worker W (Step S16). For example, the application server 10 calculates the evaluation value from a type or the number of evaluation items indicated by the received evaluation information on the worker W, and gives the evaluation value as a token.

### 1-1-2-6. Recording request transmission process

The application server 10 transmits the recording request for transaction details to the blockchain server 30 (Step S17). For example, the application server 10 transmits, as the transaction details, the identification information on the worker W, a date and time at which the token is given, the evaluation value of the token, or the like, and transmits the recording request for the transaction details.

### 1-1-2-7. Blockchain recording process

The blockchain server 30 records the transaction details in a blockchain (Step S18). For example, the blockchain server 30 generates new blockchain information by adding the transaction details to the blockchain information for each of the workplaces.

### 1-1-3. Remind notification process

A remind notification process for detecting communication between the supervisor S and the worker W and providing a reminder of feedback will be described below.

### 1-1-3-1. Communication detection process

The application server 10 detects occurrence of communication between the supervisor S and the worker W (Step S19). For example, the application server 10 determines whether communication is performed or not by identifying a posture, such as a horizontal position, a height position, or body orientation, from the location information on the supervisor S and the location information on the worker W.

### 1-1-2-2. Remind information transmission process

The application server 10 transmits the remind information to the supervisor S (Step S20). For example, the application server 10 provides the remind information for requesting feedback, such as giving praise to the worker W, to the supervisor terminal 20A of the supervisor S who has performed talent assessment on the worker W.

### 1-2. Information processing of reference technology

An overview of information processing of a reference technology will be described first, and thereafter, problems with the reference technology will be described.

### 1-2-1. Overview of information processing of reference technology

Talent assessment of the reference technology is performed as described below. Firstly, the supervisor visually checks work performance of a worker. Secondly, if the worker is performing working or the worker is not present at a close distance, the supervisor waits until the work is finished or performs assessment at another time. Thirdly, the supervisor activates an application for performing talent assessment on the supervisor terminal. Fourthly, the supervisor selects an item to be subjected to the talent assessment from a menu screen of the talent assessment. Fifthly, the supervisor reads a QR code (registered trademark) that is attached to a helmet of the worker or an IC tag that is carried by the worker by a camera or an IC tag reader of the supervisor terminal, and performs the talent assessment. Sixthly, the supervisor gives feedback, such as praise, to the worker. In this manner, in the information processing of the reference technology, to evaluate the worker, the supervisor visually checks the way of working and performs talent assessment by performing face-to-face communication.

### 1-2-2. Problem with information processing of reference technology

However, in the information processing of the reference technology, it is often the case that the supervisor is not able to immediately perform the talent assessment because the worker is present in a place, such as a high place, where it is difficult to talk to the worker during work, or the worker may be busy with work. Further, if the supervisor postpones the assessment until the work is finished, the supervisor may forget the assessment or may perform talent assessment on inappropriate items when performing evaluation at a later time. In view of the above, in the information processing of the reference technology, it is difficult to effectively encourage the worker to change behaviors.

### 1-3. Effects of information processing system 100-2

An overview of the information processing system 100-2 according to the second embodiment will be described first, and thereafter, effects of the information processing system 100-2 will be described.

### 1-3-1. Overview of information processing system 100-2

The information processing system 100-2 performs a location information acquisition process and a talent assessment process as described below. Firstly, the application server 10 receives the location information on the worker W from the worker terminal 20B, and receives the location information on the supervisor S from the worker terminal 20B. Secondly, the application server 10 transmits the map information to the supervisor terminal 20A. Thirdly, the supervisor terminal 20A displays a map. Fourthly, the supervisor terminal 20A acquires input information on the talent assessment. Fifthly, the supervisor terminal 20A transmits the evaluation information to the application server 10. Sixthly, the application server 10 gives a token to the worker W. Seventhly, the application server 10 transmits a transaction details recording request to the blockchain server 30. Eighthly, the blockchain server 30 records the transaction details in a blockchain.

Further, the information processing system 100-2 performs a remind notification process as described below. Firstly, the application server 10 detects occurrence of communication between the supervisor S and the worker W. Secondly, the application server 10 transmits remind information to the supervisor S.

**In** other words, the information processing system 100-2 is a system that is able to select a target from a map that is generated by using the location information. For example, the information processing system 100-2 is able to display the worker W who is present close to the supervisor S on the supervisor terminal 20A, and select the worker W to be subjected to the talent assessment. **In** this case, the information processing system 100-2 displays, on the map, the worker W who is present at approximately the same height as the supervisor S, by taking into account a high-place work or the like. Meanwhile, the information processing system 100-2 is able to display the worker W who is present in an upper part or the worker W who is present in a lower part, by switching display of the map as described above.

Further, the information processing system 100-2 is a system that is able to determine whether communication is being performed from the location information, time information, and body orientation (posture) information, and transmit the remind information. For example, if the talent assessment is performed in only a non-face-to-face manner, the assessment becomes a businesslike work, and communication between the supervisor S and the worker W may be reduced, which is a concern. **In** view of the above, the information processing system 100-2 transmits a remind notice related to details of the previous talent assessment from the system only when certain communication is performed, such as during break time or during meeting, so that it is possible to encourage communication, such as giving praise.

### 1-3-2. Improvement achieved by information processing system 100-2

In the information processing system 100-2, the following improvement is expected. Firstly, it is possible to perform talent assessment even if face-to-face communication is difficult, such as when the worker W is performing a high-place work. Secondly, it is possible to perform talent assessment even if the worker W is occupied with work. Thirdly, it is possible to prevent forgetting to praise the worker after non-face-to-face assessment. Thus, the information processing system 100-2 is able to effectively encourage the worker W to change behaviors.

### 2. Configuration of each of apparatuses in information processing system 100-2

A functional configuration of the application server 10 included in the information processing system 100-2 illustrated in FIG. 10 will be described below. Meanwhile, an entire configuration example of the information processing system 100-2 and configuration examples of the terminal device 20 and the blockchain server 30 are the same as those of the first embodiment illustrated in FIG. 2, and therefore, explanation thereof will be omitted.

### 2-1. Configuration example of application server 10

The application server 10 includes the communication unit 11, the storage unit 12, and the control unit 13. Meanwhile, the application server 10 may include an input unit (for example, a keyboard, a mouse, or the like) that receives various kinds of operation from a system provider of the information processing system 100-2, or an output unit (for example, a liquid crystal display, or the like) for outputting various kinds of information.

### 2-1-1. Communication unit 11

The communication unit 11 controls data communication with other apparatuses. Meanwhile, the communication unit 11 performs the same process as the first embodiment illustrated in FIG. 2, and therefore, explanation thereof will be omitted.

### 2-1-2. Storage unit 12

The storage unit 12 stores therein various kinds of information that are referred to when the control unit 13 operates and various kinds of information that are acquired when the control unit 13 operates. Meanwhile, The storage unit 12 performs the same processes as the first embodiment illustrated in FIG. 2, and therefore, explanation thereof will be omitted.

### 2-1-3. Control unit 13

The control unit 13 manages entire control of the application server 10. The control unit 13 includes, similarly to FIG. 2, the reception unit 13a, the giving unit 13b, the use unit 13c, the transmission unit 13d, the identification unit 13e, the detection unit 13f, the notification unit 13g, the recording unit 13h, and the management unit 13i. Here, the control unit 13 may be implemented by, for example, an electronic circuit, such as a CPU or an MPU, or an integrated circuit, such as an ASIC or an FPGA.

### 2-1-3-1. Reception unit 13a

The reception unit 13a receives the evaluation information on a worker for whom a work status is evaluated. For example, the reception unit 13a receives the worker identification information that is transmitted from the worker terminal 20B as the terminal device of the worker W, and receives the evaluation information in which the work status is evaluated by using a map in which the location information on the worker W is displayed. In this case, the reception unit 13a receives the evaluation information in which the work status is evaluated by using a map in which the worker in a floor that is selected from among the same floor, an upper floor, and a lower floor with reference to the supervisor S is displayed. Meanwhile, the map to be displayed will be described later in a section 2-2. Specific example of display screen.

As a specific example of the worker identification information, the reception unit 13a receives the worker identification information on the worker W, which is stored in the storage unit 24 of the worker terminal 20B of the worker W and which is transmitted from the worker terminal 20B. In this case, the reception unit 13a may receive the worker identification information on the worker W that the worker W has input to the worker terminal 20B and that is transmitted from the worker terminal 20B.

As a specific example of the evaluation information, the reception unit 13a receives the evaluation information [the evaluation information 001a, the evaluation information 001b, and the evaluation information 001d] on the worker W1 for each of the work items, which is transmitted from the supervisor terminal 20A by the supervisor S by selecting the display screen of the supervisor terminal 20A.

Further, the reception unit 13a receives the location information that may be used to identify a position. For example, the reception unit 13a receives, as the location information, coordinates obtained by a GPS, orientation obtained by a compass, or atmospheric pressure obtained by a barometer, which is transmitted by the worker terminal 20B of the worker W. Furthermore, the reception unit 13a receives, as the location information, coordinates obtained by a GPS, orientation obtained by a compass, or atmospheric pressure obtained by a barometer, which is transmitted by the supervisor terminal 20A of the supervisor S.

### 2-1-3-2. Giving unit 13b

The giving unit 13 gives a token based on the received evaluation information to the worker W. Meanwhile, details of the processes performed by the giving unit 13b are the same as the first embodiment as described above, and therefore, explanation thereof will be omitted.

### 2-1-3-3. Use unit 13c

The use unit 13c evaluates the worker W or purchases an article that is used in the workplace of the worker W by using the token that is registered in history information. Meanwhile, details of the processes performed by the giving unit 13b are the same as the first embodiment as described above, and therefore, explanation thereof will be omitted.

### 2-1-3-4. Transmission unit 13d

The transmission unit 13d transmits various kinds of information. For example, the transmission unit 13d transmits the map information, which indicates a positional relationship between the worker W and the supervisor S and which is generated by the identification unit 13e, to the supervisor terminal 20A. Further, the transmission unit 13d may transmit the history information on the token and a recording request for the history information on the token to the blockchain server 30.

### 2-1-3-5. Identification unit 13e

The identification unit 13e identifies a horizontal position, a height position, and a posture by using the location information that is transmitted from the worker terminal 20B that is the terminal device 20 carried by the worker W. For example, the identification unit 13e identifies a height position in a Z-axis direction based on barometer information indicating the atmospheric pressure obtained by a barometer. Further, the identification unit 13e identifies a horizontal position in an X-axis direction and a Y-axis direction based on GPS information indicating the coordinates obtained by a GPS. Furthermore, the identification unit 13e identifies a posture, such as body orientation, based on compass information indicating the orientation obtained by a compass.

Moreover, the identification unit 13e identifies a horizontal position, a height position, and a posture by using the location information that is transmitted from the supervisor terminal 20A that is the terminal device 20 carried by the supervisor S. Furthermore, the identification unit 13e generates map information indicating a relative positional relationship between the worker W and the supervisor S.

### 2-1-3-6. Detection unit 13f

The detection unit 13f detects occurrence of communication between the worker W and the supervisor S who has evaluated the work status of the worker W, based on the horizontal position, the height position, and the posture that are identified by the identification unit 13e. For example, the detection unit 13f determines whether the worker W and the supervisor S are present within a predetermined range based on the horizontal position and the height position. Further, the detection unit 13f determines that communication has occurred if the worker W and the supervisor S are present for a predetermined period or more within the predetermined range and the postures are stable in a predetermined range.

### 2-1-3-7. Notification unit 13g

The notification unit 13g gives a notice for requesting the supervisor S to give feedback of evaluation to the worker W if occurrence of communication between the worker W and the supervisor S who has evaluated the work status of the worker W is detected based on the location information on the worker W. In this case, the notification unit 13g transmits the remind information as described above to the supervisor S if the detection unit 13f has detected occurrence of communication, if non-face-to-face talent assessment has been performed, and if praise is not yet given face-to-face.

### 2-1-3-8. Recording unit 13h

The recording unit 13h records the history information on the token that is given to the worker W, by using a blockchain. Further, the recording unit 13h transmits the history information on the token that is given to the worker W to the blockchain server 30 that is an information recording apparatus for recording the history information on the token by using the blockchain. Meanwhile, details of processes performed by the recording unit 13h are the same as the first embodiment as described above, and therefore, explanation thereof will be omitted.

### 2-1-3-9. Management unit 13i

The management unit 13i performs security management (user management, encryption, key management, authentication, and authorization). Meanwhile, details of processes performed by the management unit 13i are the same as the first embodiment as described above, and therefore, explanation thereof will be omitted.

### 2-2. Specific examples of display screen

Specific examples of the display screen that is displayed by the display unit 25e of the terminal device 20 of the second embodiment will be described below. In the following, the display screen of the supervisor terminal 20A of the supervisor S will be described. Meanwhile, the display screen of the worker terminal 20B of the worker W and the display screen of the administrator terminal 20C of the administrator M are the same as those of the first embodiment as described above, and therefore, explanation thereof will be omitted.

### 2-2-1. Display screen of supervisor terminal 20A

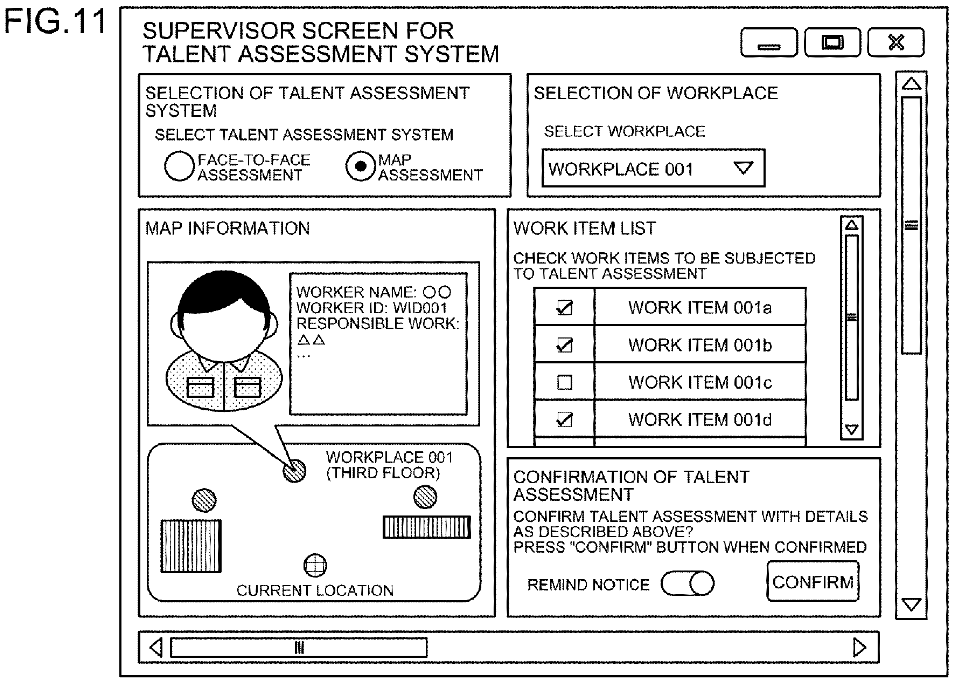

A specific example of the display screen of the supervisor terminal 20A of the supervisor S of the second embodiment will be described below with reference to FIG. 11. FIG. 11 is a diagram illustrating a specific example of the display screen of the supervisor terminal 20A of the supervisor S according to the second embodiment. In the following, "selection of talent assessment system", "selection of workplace", "map information", "work item list", and "confirmation of talent assessment" in a "supervisor screen for talent assessment system" will be described in this order.

### 2-2-1-1. Selection of talent assessment system

As illustrated in FIG. 11, the supervisor terminal 20A displays talent assessment methods in a selectable manner. In the example illustrated in FIG. 11, the supervisor terminal 20A displays a message of "select talent assessment system" and displays, as the talent assessment methods, "face-to-face assessment" for performing talent assessment face-to-face with the worker W and "map assessment" for performing talent assessment of the worker W on a map, by radio buttons in a selectable manner.

### 2-2-1-2. Selection of workplace

As illustrated in FIG. 11, the supervisor terminal 20A displays workplaces of the worker W to be subjected to the talent assessment, in a selectable manner. In the example illustrated in FIG. 11, the supervisor terminal 20A displays a message of "select workplace" and displays identification numbers or the like of workplaces, such as the "workplace 001", by a pull-down menu in a selectable manner.

### 2-2-1-3. Map information

As illustrated in FIG. 11, the relative positional relationship between the supervisor S and the worker W is displayed as a map. In the example illustrated in FIG. 11, the supervisor terminal 20A displays a circle (displayed as a "current position") that indicates a position of the supervisor S, circles (oblique lines) that indicate positions of the plurality of workers W who are working on the same floor (third floor) as the supervisor S, and rectangles (vertical lines) that indicate positions of installed devices or the like. Further, the supervisor terminal 20A is able to switch to and display a map that indicates positions of the supervisor S and the workers W who are working on an upper floor (fourth floor) or a lower floor (second floor). Meanwhile, if the floors need not clearly be distinguished from one another, the supervisor terminal 20A may switch to and display a map of an upper direction or a lower direction without identifying a specific height, such as the second floor or the third floor. Furthermore, the supervisor terminal 20A may display a map indicating positions of the workers W on the upper floor and the lower floor, in a superimposed manner with the map that indicates the positions of the workers W on the same floor. In this case, for example, the supervisor terminal 20A may display circles indicating positions of the workers W on the upper floor in red, display circles indicating positions of the workers W on the same floor in yellow, and display circles indicating positions of the workers W on the lower floor in blue.

In this case, the supervisor S is able to display the worker information on the worker W by performing tap operation on the map with respect to the worker W to be subjected to the talent assessment. In the example illustrated in FIG. 11, the supervisor terminal 20A displays, as the worker information on the worker W that is selected by the supervisor S on the map, a worker name of "∘∘", a worker ID of "WID001", a responsible work of "ΔΔ", and the like. In this case, the supervisor terminal 20A is able to display, as the worker information, an official position, an age, gender, a work history, or the like of the worker W.

### 2-2-1-4. Work item list

As illustrated in FIG. 11, the supervisor terminal 20A displays a list of work items in the workplace that is selected in the section of the workplace as described above. In the example illustrated in FIG. 11, the supervisor terminal 20A displays a message of "check work items as targets for talent assessment" and a work item list in which selectable checkbox is provided for each of the work items. In this case, the supervisor S is able to select an item to be subjected to the talent assessment by checking the checkbox of the work item to be subjected to the talent assessment of the worker W.

### 2-2-1-5. Confirmation of talent assessment

As illustrated in FIG. 11, if one or more items to be subjected to the talent assessment are selected in the work item list as described above, the supervisor terminal 20A displays a message or a button for confirming the talent assessment. In the example illustrated in FIG. 11, the supervisor terminal 20A displays a message of "Confirm talent assessment with details as described above? Press "confirm" button when confirmed" and displays a "confirm" button. In this case, the supervisor S is able to confirm the worker W and the work item to be subjected to the talent assessment by performing tap operation on the "confirm" button.

Further, the supervisor terminal 20A is able to display whether to give a remind notice or not in a selectable manner when communication between the worker W and the supervisor S is detected. In the example illustrated in FIG. 11, the supervisor terminal 20A displays a message of "remind notice" and a toggle button for selecting whether to give a remind notice or not.

### 2-2-1-6. Others

FIG. 11 illustrates an example in which the screen of the "supervisor screen for talent assessment system" is divided and "selection of talent assessment system", "selection of workplace", "map information", "work item list", and "confirmation of talent assessment" are displayed simultaneously, but a display method is not specifically limited. For example, the supervisor terminal 20A may display each of the screens such that "selection of talent assessment system", "selection of workplace", "worker information", "work item list", and "confirmation of talent assessment" are sequentially displayed in this order every time the supervisor S taps the screen.

### 3. Flow of processes performed by information processing system 100-2

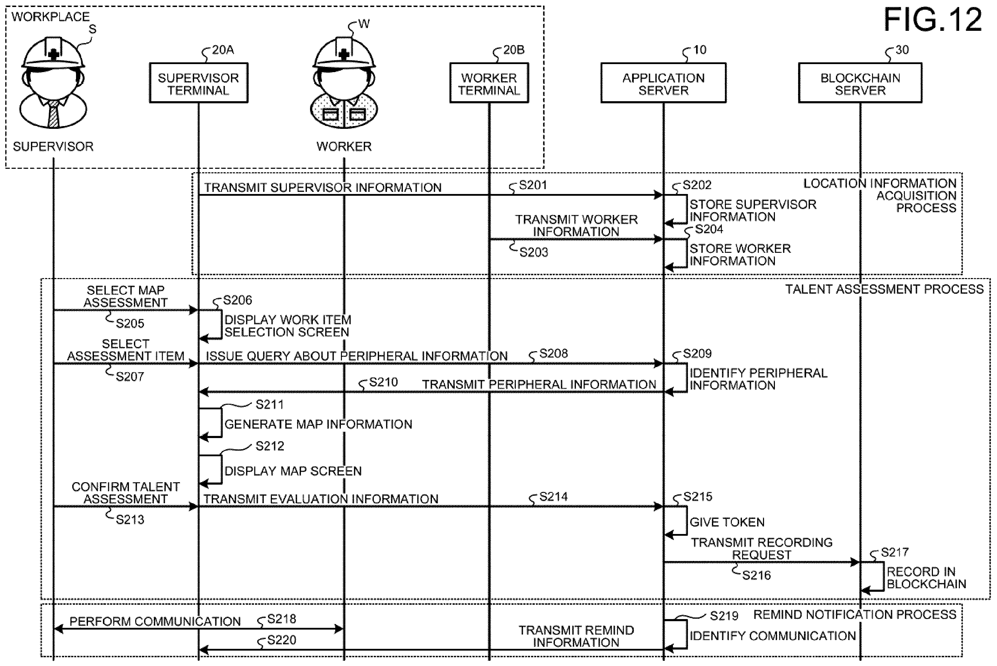

A flow of processes performed by the information processing system 100-2 according to the second embodiment will be described below with reference to FIG. 12. FIG. 12 is a sequence diagram illustrating an example of the flow of information processing according to the second embodiment. Meanwhile, processes from Steps S201 to S220 may be performed in different order. Further, some of the processes from Steps Step S201 to S220 below may be omitted.

### 3-1. Location information acquisition process

Firstly, the supervisor terminal 20A transmits the location information on the supervisor S to the application server 10 (Step S201). Secondly, the application server 10 stores the location information on the supervisor S (Step S202). Thirdly, the worker terminal 20B transmits the location information on the worker W to the application server 10 (Step S203). Fourthly, the application server 10 stores the location information on the worker W (Step S204). The location information acquired in the location information acquisition process as described above is used to generate the map information in the talent assessment process and identify communication in the remind notification process. Further, in this case, the worker terminal 20B transmits the worker information on the worker W to the application server 10.

### 3-2. Talent assessment process

Firstly, the supervisor S selects map assessment on the supervisor terminal 20A (Step S205). Secondly, the supervisor terminal 20A displays the work item selection screen on the supervisor terminal 20A (Step S206). Thirdly, the supervisor S selects the assessment item on the supervisor terminal 20A (Step S207). Fourthly, the supervisor terminal 20A issues a query about peripheral information to the application server 10 (Step S208). Fifthly, the application server 10 identifies the peripheral information that indicates the positional relationship between the supervisor S and the worker W by using the location information (Step S209). Sixthly, the application server 10 transmits the peripheral information to the supervisor terminal 20A (Step S210). Seventhly, the supervisor terminal 20A generates the map information (Step S211). Eighthly, the supervisor terminal 20A displays a map screen on the supervisor terminal 20A (Step S212). Ninthly, the supervisor S confirms talent assessment on the map on the supervisor terminal 20A (Step S213). Tenthly, the supervisor terminal 20A transmits the evaluation information to the application server 10 (Step S214). Eleventhly, the application server 10 gives a token to the worker W (Step S215). Twelfthly, the application server 10 transmits a recording request for token transaction details to the blockchain server 30 (Step S216). Thirteenthly, the blockchain server 30 records the transaction details in a blockchain (Step S217).

### 3-3. Remind notification process

Firstly, communication is performed between the supervisor S and the worker W (Step S218). Secondly, the application server 10 identifies occurrence of the communication between the supervisor S and the worker W based on the location information (Step S219). Thirdly, the application server 10 transmits a remind information to the supervisor terminal 20A (Step S220).

### 4. Effects of second embodiment

Effects of the second embodiment will be described lastly. First to fourth effects corresponding to the processes of the present embodiment will be described below.

### 4-1. First effect

Firstly, in the process according to the embodiment as described above, the worker identification information that is transmitted from the worker terminal 20B of the worker W and the evaluation information in which a work status is evaluated by using a map in which the location information on the worker W is displayed are received, the evaluation value corresponding to the work item indicated by the evaluation information is calculated as a token, the evaluation value is given to the worker W indicated by the worker identification information, and the history information that includes the worker identification information, a date and time at which the token is given, and the evaluation value is transmitted to the blockchain server 30 that records the history information on the token by using the blockchain. Therefore, in this process, it is possible to perform talent assessment in a non-face-to-face manner, and it is possible to effectively encourage the worker W to change behaviors.

### 4-2. Second effect

Secondly, in the process according to the embodiment as described above, the evaluation information in which the work status is evaluated by using a map in which the workers who are present in a certain floor that is selected from among the same floor, an upper floor, and a lower floor with reference to the supervisor S are displayed. Therefore, in this process, it is possible to perform talent assessment in a non-face-to-face manner with an increased number of the workers W, so that it is possible to effectively encourage the worker W to change behaviors.

### 4-3. Third effect

Thirdly, in the process according to the embodiment as described above, if occurrence of communication between the worker W and the supervisor S who has evaluated the work status of the worker W is detected based on the location information on the worker W, a notice for requesting the supervisor S to give feedback of evaluation to the worker W is provided. Therefore, in this process, it is possible to prevent forgetting to praise in the non-face-to-face talent assessment, and it is possible to effectively encourage the worker W to change behaviors.

### 4-4. Fourth effect

Fourthly, in the process according to the embodiment as described above, the horizontal position, the height position, and the posture of the worker W are identified by using the location information that is transmitted from the worker terminal 20B carried by the worker W, and occurrence of communication between the worker W and the supervisor S who has evaluated the work status of the worker W is detected based on the identified horizontal position, the identified height position, and the identified posture. Therefore, in this process, it is possible to further prevent forgetting to praise in the non-face-to-face talent assessment by detecting occurrence of communication with high accuracy, and it is possible to effectively encourage the worker W to change behaviors.

### System

The processing procedures, control procedures, specific names, and information including various kinds of data and parameters illustrated in the above-described document and drawings may be arbitrarily changed unless otherwise specified.

The components illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Further, for each processing function performed by each apparatus, all or any part of the processing function may be implemented by a CPU and a program analyzed and executed by the CPU or may be implemented as hardware by wired logic.

### Hardware

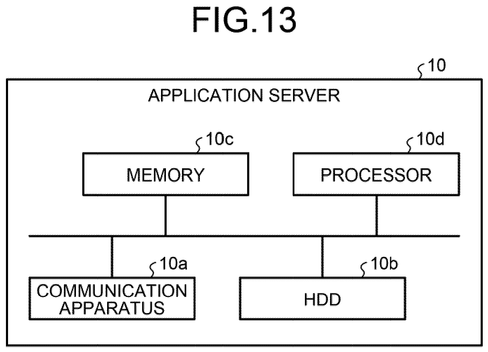

A hardware configuration example of the application server 10 that is the information management apparatus will be described below. Meanwhile, other apparatuses, such as the terminal device 20 and the blockchain server 30, may have the same hardware configuration. FIG. 13 is a diagram illustrating a hardware configuration example. As illustrated in FIG. 13, the application server 10 includes a communication apparatus 10a, a hard disk drive (HDD) 10b, a memory 10c, and a processor 10d. Further, all of the units illustrated in FIG. 13 are connected to one another by a bus or the like.

The communication apparatus 10a is a network interface card or the like and performs communication with a different server. The HDD 10b stores therein a program and a DB for implementing the functions illustrated in FIG. 2.

The processor 10d reads a program that executes the same processes as performed by each of the processing units illustrated in FIG. 2 from the HDD 10b or the like, loads the program onto the memory 10c, and operates a process that implements each of the functions illustrated in FIG. 2 and the like. For example, the process implements the same function as each of the processing units included in the application server 10. Specifically, the processor 10d reads a program that has the same functions as those of the reception unit 13a, the giving unit 13b, the use unit 13c, the transmission unit 13d, the identification unit 13e, the detection unit 13f, the notification unit 13g, the recording unit 13h, the management unit 13i, and the like from the HDD 10b or the like. Then, the processor 10d executes the process that performs the same processes as those of the reception unit 13a, the giving unit 13b, the use unit 13c, the transmission unit 13d, the identification unit 13e, the detection unit 13f, the notification unit 13g, the recording unit 13h, the management unit 13i, and the like.

In this manner, the application server 10 operates as an apparatus that performs various kinds of processing methods by reading a program and executing the program. Further, the application server 10 may be able to cause a medium reader device to read the above-described program from a recording medium, and implement the same functions as those of the embodiments as described above by executing the read program as described above. Meanwhile, the program described in this embodiment need not always be executed by the application server 10. For example, the present disclosure is similarly applicable to a case where a different computer or a different server executes a program or where a different computer and a different server execute the program in a cooperative manner.

The program may be provided via a network, such as the Internet. Further, the program may be recorded in a computer readable recording medium, such as a hard disk, a flexible disk (FD), a compact disc (CD)-ROM, a magneto-optical disk (MO), or a digital versatile disk (DVD), and may be executed by being read by the computer from the recording medium.

According to the present disclosure, it is possible to effectively encourage a worker to change behaviors.

## Claims

1. An information management apparatus (10) comprising:
a reception unit (13a) that receives worker identification information on a worker and evaluation information on the worker for whom a work status is evaluated by using a map in which location information on the worker is displayed; and
a giving unit (13b) that calculates, as a token, an evaluation value that corresponds to a work item indicated by the evaluation information, and gives, as the token, the evaluation value to the worker indicated by the worker identification information;
wherein the information management apparatus (10) further comprises
a recording unit (13h) that transmits history information that includes the worker identification information, a date and time at which the token is given, and the evaluation value to an information recording apparatus (30) that records the history information on the token by using a blockchain;
a notification unit (13g) that gives a notice for requesting a supervisor to give feedback of evaluation on the worker if occurrence of communication between the worker and a supervisor who has evaluated a work status of the worker is detected based on location information on the worker;
an identification unit (13e) that identifies a horizontal position, a height position, and a posture of the worker by using location information that is transmitted from a terminal device (20) carried by the worker; and
a detection unit (13f) that detects occurrence of communication between the worker and the supervisor who has evaluated the work status of the worker, based on the identified horizontal position, the identified height position, and the identified posture.

2. The information management apparatus (10) according to claim 1, further including:
a use unit (13c) that performs at least one of evaluation of the worker or a purchase of an article that is used in a workplace of the worker, by using the token that is registered in the history information.

3. The information management apparatus (10) according to claim 1 or 2, wherein
the reception unit (13a) receives the worker identification information that is read from an article carried by the worker or that is transmitted from a terminal device (20) of the worker, and the evaluation information in which the work status is evaluated for each of work items in a workplace of the worker,
the giving unit (13b) calculates, as the token, an evaluation value that corresponds to the work item indicated by the evaluation information, and gives, as the token, the evaluation value to the worker indicated by the worker identification information, and
the recording (13h) unit transmits the history information that includes the worker identification information, a date and time at which the token is given, and the evaluation value to an information recording apparatus that stores the history information on the token by using the blockchain.

4. The information management apparatus (10) according to any one of claims 1 to 3, wherein the reception unit (13a) receives the evaluation information in which the work status is evaluated by using the map in which the worker who is present in a floor that is selected from among a same floor, an upper floor, and a lower floor with reference to the supervisor is displayed.

5. The information management apparatus (10) according to any one of claims 1 to 4, wherein the recording unit (13h) transmits the history information on the worker for a predetermined period to a terminal device (20) of the worker if the token is given or a query is issued by the worker.

6. The information management apparatus (10) according to any one of claims 1 to 5, wherein the recording unit (13h) transmits setting information related to at least one of a method of calculating the token or a method of giving the token to a terminal device (20) of an administrator of the information management apparatus (10) in response to a request from the administrator.

7. An information management method implemented by a computer (10), the information management method comprising:
receiving worker identification information on a worker and evaluation information on the worker for whom a work status is evaluated by using a map in which location information on the worker is displayed;
calculating, as a token, an evaluation value that corresponds to a work item indicated by the evaluation information;
giving, as the token, the evaluation value to the worker indicated by the worker identification information; and
transmitting history information that includes the worker identification information, a date and time at which the token is given, and the evaluation value to an information recording apparatus (30) that records the history information on the token by using a blockchain;
giving a notice for requesting a supervisor to give feedback of evaluation on the worker if occurrence of communication between the worker and a supervisor who has evaluated a work status of the worker is detected based on location information on the worker;
identifying a horizontal position, a height position, and a posture of the worker by using location information that is transmitted from a terminal device (20) carried by the worker; and
detecting occurrence of communication between the worker and the supervisor who has evaluated the work status of the worker, based on the identified horizontal position, the identified height position, and the identified posture.

8. An information management program causing a computer (10) to execute processing comprising:
receiving worker identification information on a worker and evaluation information on the worker for whom a work status is evaluated by using a map in which location information on the worker is displayed;
calculating, as a token, an evaluation value corresponding to a work item indicated by the evaluation information;
giving, as the token, the evaluation value to the worker indicated by the worker identification information; and
transmitting history information that includes the worker identification information, a date and time at which the token is given, and the evaluation value to an information recording apparatus (30) that records the history information on the token by using a blockchain;
giving a notice for requesting a supervisor to give feedback of evaluation on the worker if occurrence of communication between the worker and a supervisor who has evaluated a work status of the worker is detected based on location information on the worker;
identifying a horizontal position, a height position, and a posture of the worker by using location information that is transmitted from a terminal device (20) carried by the worker; and
detecting occurrence of communication between the worker and the supervisor who has evaluated the work status of the worker, based on the identified horizontal position, the identified height position, and the identified posture.

## Patentansprüche

1. Informationsverwaltungsapparat (10), der aufweist:
eine Empfangseinheit (13a), die Arbeiteridentifikationsinformationen über einen Arbeiter und Bewertungsinformationen über den Arbeiter, für den ein Arbeitsstatus unter Verwendung einer Karte bewertet wird, auf der Standortinformationen über den Arbeiter angezeigt werden, empfängt; und
eine Ausgabeeinheit (13b), die als einen Token einen Bewertungswert, der einem Arbeitspunkt entspricht, der durch die Bewertungsinformationen gekennzeichnet ist, berechnet und als den Token den Bewertungswert an den Arbeiter, der durch die Arbeiteridentifikationsinformationen gekennzeichnet ist, ausgibt;
wobei der Informationsverwaltungsapparat (10) des Weiteren aufweist:
eine Aufzeichnungseinheit (13h), die Verlaufsinformationen, die die Arbeiteridentifikationsinformationen, ein Datum und eine Zeit, zu der der Token ausgegeben wird, und den Bewertungswert enthalten, an einen Informationsaufzeichnungsapparat (30) überträgt, der die Verlaufsinformationen über den Token unter Verwendung einer Blockchain aufzeichnet;
eine Benachrichtigungseinheit (13g), die eine Benachrichtigung ausgibt, um einen Supervisor aufzufordern, eine Rückmeldung über eine Bewertung über den Arbeiter auszugeben, wenn ein Auftreten einer Kommunikation zwischen dem Arbeiter und einem Supervisor, der einen Arbeitsstatus des Arbeiters bewertet hat, basierend auf Standortinformationen über den Arbeiter erfasst wird;
eine Identifikationseinheit (13e), die eine horizontale Position, eine Höhenposition und eine Haltung des Arbeiters unter Verwendung von Standortinformationen, die von einer Endgerätvorrichtung (20) übertragen werden, die von dem Arbeiter getragen wird, identifiziert; und
eine Erfassungseinheit (13f), die das Auftreten einer Kommunikation zwischen dem Arbeiter und dem Supervisor, der den Arbeitsstatus des Arbeiters bewertet hat, basierend auf der identifizierten horizontalen Position, der identifizierten Höhenposition und der identifizierten Haltung erfasst.

2. Informationsverwaltungsapparat (10) nach Anspruch 1, der des Weiteren enthält:
eine Verwendungseinheit (13c), die mindestens eine der Tätigkeiten, Bewertung des Arbeiters oder Kauf eines Artikels, der an einem Arbeitsplatz des Arbeiters verwendet wird, unter Verwendung des Tokens, der in den Verlaufsinformationen registriert ist, durchführt.

3. Informationsverwaltungsapparat (10) nach Anspruch 1 oder 2, wobei
die Empfangseinheit (13a) die Arbeiteridentifikationsinformationen, die von einem Artikel gelesen werden, der von dem Arbeiter getragen wird, oder die von einer Endgerätvorrichtung (20) des Arbeiters übertragen werden, und die Bewertungsinformationen, in denen der Arbeitsstatus für jeden von Arbeitspunkten an einem Arbeitsplatz des Arbeiters bewertet wird, empfängt,
die Ausgabeeinheit (13b) als den Token einen Bewertungswert, der dem Arbeitspunkt entspricht, der durch die Bewertungsinformationen gekennzeichnet ist, berechnet und als den Token den Bewertungswert an den Arbeiter, der durch die Arbeiteridentifikationsinformationen gekennzeichnet ist, ausgibt, und
die Aufzeichnungseinheit (13h) die Verlaufsinformationen, die die Arbeiteridentifikationsinformationen, ein Datum und eine Zeit, zu der der Token ausgegeben wird, und den Bewertungswert enthalten, an einen Informationsaufzeichnungsapparat überträgt, der die Verlaufsinformationen über den Token unter Verwendung der Blockchain speichert.

4. Informationsverwaltungsapparat (10) nach einem der Ansprüche 1 bis 3, wobei die Empfangseinheit (13a) die Bewertungsinformationen empfängt, in denen der Arbeitsstatus unter Verwendung der Karte bewertet wird, auf der der Arbeiter, der sich in einem Stockwerk befindet, das aus demselben Stockwerk, einem oberen Stockwerk und einem unteren Stockwerk unter Bezugnahme auf den Supervisor ausgewählt wird, angezeigt wird.

5. Informationsverwaltungsapparat (10) nach einem der Ansprüche 1 bis 4, wobei die Aufzeichnungseinheit (13h) die Verlaufsinformationen über den Arbeiter für einen vorbestimmten Zeitabschnitt an eine Endgerätvorrichtung (20) des Arbeiters überträgt, wenn der Token ausgegeben wird oder eine Anfrage von dem Arbeiter ausgegeben wird.

6. Informationsverwaltungsapparat (10) nach einem der Ansprüche 1 bis 5, wobei die Aufzeichnungseinheit (13h) Einstellungsinformationen, die auf mindestens eines der Verfahren, Verfahren zum Berechnen des Tokens oder Verfahren zum Ausgeben des Tokens an eine Endgerätvorrichtung (20) eines Administrators des Informationsverwaltungsapparats (10), bezogen sind, in Erwiderung auf eine Anfrage von dem Administrator überträgt.

7. Informationsverwaltungsverfahren, das von einem Computer (10) implementiert wird, wobei das Informationsverwaltungsverfahren aufweist:
ein Empfangen von Arbeiteridentifikationsinformationen über einen Arbeiter und Bewertungsinformationen über den Arbeiter, für den ein Arbeitsstatus unter Verwendung einer Karte bewertet wird, auf der Standortinformationen über den Arbeiter angezeigt werden,
ein Berechnen, als einen Token, eines Bewertungswerts, der einem Arbeitspunkt entspricht, der durch die Bewertungsinformationen gekennzeichnet ist;
ein Ausgeben, als den Token, des Bewertungswerts an den Arbeiter, der durch die Arbeiteridentifikationsinformationen gekennzeichnet ist; und
ein Übertragen von Verlaufsinformationen, die die Arbeiteridentifikationsinformationen, ein Datum und eine Zeit, zu der der Token ausgegeben wird, und den Bewertungswert enthalten, an einen Informationsaufzeichnungsapparat (30), der die Verlaufsinformationen über den Token unter Verwendung einer Blockchain aufzeichnet;
ein Ausgeben einer Benachrichtigung, um einen Supervisor aufzufordern, eine Rückmeldung über eine Bewertung über den Arbeiter auszugeben, wenn ein Auftreten einer Kommunikation zwischen dem Arbeiter und einem Supervisor, der einen Arbeitsstatus des Arbeiters bewertet hat, basierend auf Standortinformationen über den Arbeiter erfasst wird;
ein Identifizieren einer horizontalen Position, einer Höhenposition und einer Haltung des Arbeiters unter Verwendung von Standortinformationen, die von einer Endgerätvorrichtung (20) übertragen werden, die von dem Arbeiter getragen wird; und
ein Erfassen des Auftretens einer Kommunikation zwischen dem Arbeiter und dem Supervisor, der den Arbeitsstatus des Arbeiters bewertet hat, basierend auf der identifizierten horizontalen Position, der identifizierten Höhenposition und der identifizierten Haltung.

8. Informationsverwaltungsprogramm, das einen Computer (10) veranlasst, eine Verarbeitung auszuführen, die aufweist:
ein Empfangen von Arbeiteridentifikationsinformationen über einen Arbeiter und Bewertungsinformationen über den Arbeiter, für den ein Arbeitsstatus unter Verwendung einer Karte bewertet wird, auf der Standortinformationen über den Arbeiter angezeigt werden;
ein Berechnen, als einen Token, eines Bewertungswerts, der einem Arbeitspunkt entspricht, der durch die Bewertungsinformationen gekennzeichnet ist;
ein Ausgeben, als den Token, des Bewertungswerts an den Arbeiter, der durch die Arbeiteridentifikationsinformationen gekennzeichnet ist; und
ein Übertragen von Verlaufsinformationen, die die Arbeiteridentifikationsinformationen, ein Datum und eine Zeit, zu der der Token ausgegeben wird, und den Bewertungswert enthalten, an einen Informationsaufzeichnungsapparat (30), der die Verlaufsinformationen über den Token unter Verwendung einer Blockchain aufzeichnet;
ein Ausgeben einer Benachrichtigung, um einen Supervisor aufzufordern, eine Rückmeldung über eine Bewertung über den Arbeiter auszugeben, wenn ein Auftreten einer Kommunikation zwischen dem Arbeiter und einem Supervisor, der einen Arbeitsstatus des Arbeiters bewertet hat, basierend auf Standortinformationen über den Arbeiter erfasst wird;
ein Identifizieren einer horizontalen Position, einer Höhenposition und einer Haltung des Arbeiters unter Verwendung von Standortinformationen, die von einer Endgerätvorrichtung (20) übertragen werden, die von dem Arbeiter getragen wird; und
ein Erfassen des Auftretens einer Kommunikation zwischen dem Arbeiter und dem Supervisor, der den Arbeitsstatus des Arbeiters bewertet hat, basierend auf der identifizierten horizontalen Position, der identifizierten Höhenposition und der identifizierten Haltung.

## Revendications

1. Appareil de gestion d'informations (10) comprenant :
une unité de réception (13a) qui reçoit des informations d'identification de travailleur et des informations d'évaluation de travailleur pour lequel un statut de travail est évalué en utilisant une carte sur laquelle des informations d'emplacement sur le travailleur sont affichées ; et
une unité de remise (13b) qui calcule, en tant que jeton, une valeur d'évaluation qui correspond à un élément de travail indiqué par les informations d'évaluation, et remet, en tant que jeton, la valeur d'évaluation au travailleur indiqué par les informations d'identification de travailleur ;
dans lequel l'appareil de gestion d'informations (10) comprend en outre
une unité d'enregistrement (13h) qui transmet des informations d'historique qui incluent les informations d'identification de travailleur, une date et une heure auxquelles le jeton est remis, et la valeur d'évaluation à un appareil d'enregistrement d'informations (30) qui enregistre les informations d'historique sur le jeton en utilisant une blockchain ;
une unité de notification (13g) qui remet un avis pour demander à un superviseur de remettre un retour d'évaluation sur le travailleur si l'occurrence d'une communication entre le travailleur et un superviseur qui a évalué un statut de travail du travailleur est détectée sur la base d'informations d'emplacement sur le travailleur ;
une unité d'identification (13e) qui identifie une position horizontale, une position de hauteur et une posture du travailleur en utilisant des informations d'emplacement qui sont transmises par un dispositif terminal (20) porté par le travailleur ; et
une unité de détection (13f) qui détecte l'occurrence d'une communication entre le travailleur et le superviseur qui a évalué le statut de travail du travailleur, sur la base de la position horizontale identifiée, de la position de hauteur identifiée et de la posture identifiée.

2. Appareil de gestion d'informations (10) selon la revendication 1, incluant en outre :
une unité d'utilisation (13c) qui réalise au moins une évaluation du travailleur ou un achat d'un article qui est utilisé sur un lieu de travail du travailleur, en utilisant le jeton qui est enregistré dans les informations d'historique.

3. Appareil de gestion d'informations (10) selon la revendication 1 ou 2, dans lequel
l'unité de réception (13a) reçoit les informations d'identification de travailleur qui sont lues à partir d'un article porté par le travailleur ou qui sont transmises à partir d'un dispositif terminal (20) du travailleur, et les informations d'évaluation dans lesquelles le statut de travail est évalué pour chacun d'éléments de travail sur un lieu de travail du travailleur,
l'unité de remise (13b) calcule, en tant que jeton, une valeur d'évaluation qui correspond à l'élément de travail indiqué par les informations d'évaluation, et remet, en tant que jeton, la valeur d'évaluation au travailleur indiqué par les informations d'identification de travailleur ; et
l'unité d'enregistrement (13h) transmet des informations d'historique qui incluent les informations d'identification de travailleur, une date et une heure auxquelles le jeton est remis, et la valeur d'évaluation à un appareil d'enregistrement d'informations qui stocke les informations d'historique sur le jeton en utilisant la blockchain.

4. Appareil de gestion d'informations (10) selon l'une quelconque des revendications 1 à 3, dans lequel l'unité de réception (13a) reçoit les informations d'évaluation dans lesquelles le statut de travail est évalué en utilisant la carte dans laquelle le travailleur qui est présent à un étage qui est sélectionné parmi un même étage, un étage supérieur et un étage inférieur par rapport au superviseur est affiché.

5. Appareil de gestion d'informations (10) selon l'une quelconque des revendications 1 à 4, dans lequel l'unité d'enregistrement (13h) transmet les informations d'historique sur le travailleur pendant une période prédéterminée à un dispositif terminal (20) du travailleur si le jeton est remis ou si une demande est émise par le travailleur.

6. Appareil de gestion d'informations (10) selon l'une quelconque des revendications 1 à 5, dans lequel l'unité d'enregistrement (13h) transmet des informations de réglage relatives à au moins un parmi un procédé de calcul du jeton ou un procédé de remise du jeton à un dispositif terminal (20) d'un administrateur de l'appareil de gestion d'informations (10) en réponse à une demande de l'administrateur.

7. Procédé de gestion d'informations mis en œuvre par un ordinateur (10), le procédé de gestion d'informations comprenant :
la réception d'informations d'identification de travailleur et des informations d'évaluation de travailleur pour lequel un statut de travail est évalué en utilisant une carte sur laquelle des informations d'emplacement sur le travailleur sont affichées ;
le calcul, en tant que jeton, d'une valeur d'évaluation qui correspond à un élément de travail indiqué par les informations d'évaluation ;
la remise, en tant que jeton, de la valeur d'évaluation au travailleur indiquée par les informations d'identification de travailleur ; et
la transmission d'informations d'historique qui incluent les informations d'identification de travailleur, une date et une heure auxquelles le jeton est remis, et la valeur d'évaluation à un appareil d'enregistrement d'informations (30) qui enregistre les informations d'historique sur le jeton en utilisant une blockchain ;
la remise d'un avis pour demander à un superviseur de remettre un retour d'évaluation sur le travailleur si l'occurrence d'une communication entre le travailleur et un superviseur qui a évalué un statut de travail du travailleur est détectée sur la base d'informations d'emplacement sur le travailleur ;
l'identification d'une position horizontale, une position de hauteur et une posture du travailleur en utilisant des informations d'emplacement qui sont transmises par un dispositif terminal (20) porté par le travailleur ; et
la détection de l'occurrence d'une communication entre le travailleur et le superviseur qui a évalué le statut de travail du travailleur, sur la base de la position horizontale identifiée, de la position de hauteur identifiée et de la posture identifiée.

8. Programme de gestion d'informations amenant un ordinateur (10) à exécuter un traitement comprenant :
la réception d'informations d'identification de travailleur et des informations d'évaluation de travailleur pour lequel un statut de travail est évalué en utilisant une carte sur laquelle des informations d'emplacement sur le travailleur sont affichées ;
le calcul, en tant que jeton, d'une valeur d'évaluation correspondant à un élément de travail indiqué par les informations d'évaluation ;
la remise, en tant que jeton, de la valeur d'évaluation au travailleur indiquée par les informations d'identification de travailleur ; et
la transmission d'informations d'historique qui incluent les informations d'identification de travailleur, une date et une heure auxquelles le jeton est remis, et la valeur d'évaluation à un appareil d'enregistrement d'informations (30) qui enregistre les informations d'historique sur le jeton en utilisant une blockchain ;
la remise d'un avis pour demander à un superviseur de remettre un retour d'évaluation sur le travailleur si l'occurrence d'une communication entre le travailleur et un superviseur qui a évalué un statut de travail du travailleur est détectée sur la base d'informations d'emplacement sur le travailleur ;
l'identification d'une position horizontale, d'une position de hauteur et d'une posture du travailleur en utilisant des informations d'emplacement qui sont transmises par un dispositif terminal (20) porté par le travailleur ; et la détection de l'occurrence d'une communication entre le travailleur et le superviseur qui a évalué le statut de travail du travailleur, sur la base de la position horizontale identifiée, de la position de hauteur identifiée et de la posture identifiée.
